(19) Europäisches Patentamt
European Patent Office
Office européen des brevets

(11) EP 3 524 644 B1

(12) EUROPEAN PATENT SPECIFICATION

(45) Date of publication and mention of the grant of the patent:
**11.05.2022 Bulletin 2022/19**

(21) Application number: **17858368.8**

(22) Date of filing: **02.10.2017**

(51) International Patent Classification (IPC):
***C08G 65/40*** *(2006.01)* ***C08L 71/12*** *(2006.01)*
***C08K 5/00*** *(2006.01)* *C08K 3/32* *(2006.01)*

(52) Cooperative Patent Classification (CPC):
(C-Sets available)
**C08G 65/44; C08G 65/485; C08L 71/12;**
C08G 2650/56; C08K 5/005; C08K 2003/321;
C08K 2003/323; C08K 2003/324; C08K 2003/326
(Cont.)

(86) International application number:
**PCT/JP2017/035888**

(87) International publication number:
**WO 2018/066530 (12.04.2018 Gazette 2018/15)**

(54) **POLYPHENYLENE ETHER RESIN COMPOSITION**

POLYPHENYLENETHERHARZZUSAMMENSETZUNG

COMPOSITION DE RÉSINE DE POLY(ÉTHER DE PHÉNYLÈNE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2016 JP 2016196751**

(43) Date of publication of application:
**14.08.2019 Bulletin 2019/33**

(73) Proprietor: **ASAHI KASEI KABUSHIKI KAISHA**
**Tokyo 100-0006 (JP)**

(72) Inventor: **ORIMO Chihiro**
**Tokyo 100-0006 (JP)**

(74) Representative: **Strehl Schübel-Hopf & Partner**
**Maximilianstrasse 54**
**80538 München (DE)**

(56) References cited:
**JP-A- S 636 024**
**JP-A- H0 812 753**
**JP-A- H0 873 730**
**JP-A- S5 736 150**
**JP-A- H03 185 058**
**US-A1- 2014 170 900**

- **DATABASE WPI Week 201434 Thomson Scientific, London, GB; AN 2014-J15738 XP002794076, & CN 103 642 196 A (CHANGSHU BLUE SKY NEW MATERIAL TECHNOLOGY CO LTD) 19 March 2014 (2014-03-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 524 644 B1

(52) Cooperative Patent Classification (CPC): (Cont.)

C-Sets
**C08K 3/32;**
**C08L 71/12**

## Description

### TECHNICAL FIELD

This disclosure relates to a polyphenylene ether resin composition.

### BACKGROUND

Resin compositions based on polyphenylene ether (hereinafter, also referred to as "PPE") resins have features such as heat resistance, electrical properties, dimensional stability, impact resistance and low specific gravity, and are used in a wide range of applications such as various electric and electronic components, office equipment components, automotive components, building materials and other exterior materials and industrial goods.

In recent years, progress toward more compact and higher performance components has resulted in demand for favorable long-term properties in addition to short-term properties. Consequently, there is demand for a polyphenylene ether resin composition to inhibit a decrease in mechanical strength and embrittlement upon long-term exposure to a high temperature environment, specifically, to prolong the half-life of properties under high-temperature aging at over 140°C to more than 500 hours. The properties greatly affected upon long-term exposure to heat are impact-resistant strength, which has been determined to decline earliest among mechanical properties under a high-temperature environment.

Examples of methods for increasing thermal stability of polyphenylene ethers that have been developed up until the present time include a technique of stabilizing polyphenylene ether terminal through addition of a vinyl compound (refer to PTL 1), and a technique of increasing a thermal stability through formation of cyclic terminal (refer to PTL 2).

### CITATION LIST

#### Patent Literature

PTL 1: JP2925646 B
PTL 2: JP3052256 B

JP H08-12753 A discloses a composition comprising a polyphenylene ether, a a polyamide and a polyphosphate. JPH0873730 A discloses a composition containing a polyphenylene ether (a), a polyamide (b), an acetal (c), a polyphosphate (d), and an impact modifier (e), and the amounts of the components (c), (d) and ((e) are respectively, 0.01-5 pts.wt., 0.01-5 pts.wt. and 1-30 pts.wt. based on 100 pts.wt. of the total of the components (a) and (b).

### SUMMARY

(Technical Problem)

However, although it is possible to improve aging properties of the PPE resin composition at low temperatures in the long-term or high temperatures in the short-term, in recent years, there is demand for further improvement such as, for example, to allow for less decrease in mechanical properties due to resin embrittlement, less occurrence of poor external appearance due to increase in surface roughness, and less decrease in electrical properties even through long-term aging at high temperatures of 140°C or higher, for example.

Therefore, an objective of this disclosure is to provide a polyphenylene ether resin composition whose mechanical properties are difficult to be changed through high temperature aging (e.g. at 145°C) while the heat resistance and mechanical and electrical properties are maintained. In addition, it is preferable, in this disclosure, to provide a polyphenylene ether resin composition having a half-life of the Charpy impact strength in the high-temperature aging of 500 hours or more and excellent surface smoothness and electrical properties after a long-term heat aging (e.g. 150°C), 500 hours).

(Solution to Problem)

Specifically, this disclosure provides the following.

[1] A polyphenylene ether resin composition comprising:

(A) a polyphenylene ether; and
(B) a condensed metal phosphate, wherein

when a bend elastic constant of the polyphenylene ether resin composition before aging measured in accordance with ISO-178 in an atmospheric air is taken as 100%, time required for obtaining a bend elastic constant of 115% or more through aging in which the polyphenylene ether resin composition is left at rest at 150°C is 2,000 hours or more;
a shaped article of 12.6 cm in length, 1.3 cm in width, and 1.6 mm in thickness formed from the polyphenylene ether resin composition exhibits a rate of change in chloroform-insoluble content of 15 mass% or less before and after aging in which the shaped article is left at rest for 1,000 hours at 150°C ; and

the (A) polyphenylene ether includes at least one structural unit selected from a group consisting of chemical formulae (1), (2) and (3) illustrated below.

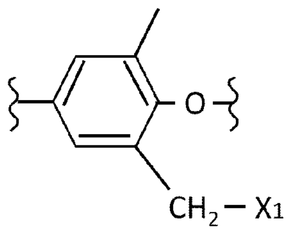

···(1)

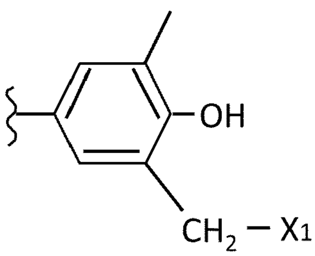

···(2)

($X_1$ in chemical formulae (1) and (2) is a group selected from chemical formulae illustrated below,

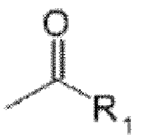 , 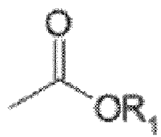 , 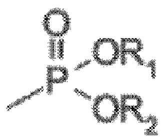 , 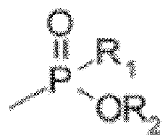 , 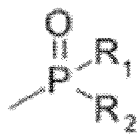

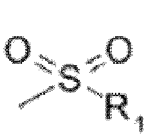 , 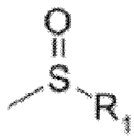

where $R_1$ and $R_2$ in $X_1$ are each, independently of one another, a substituent having a carbon number of 1 or more.)

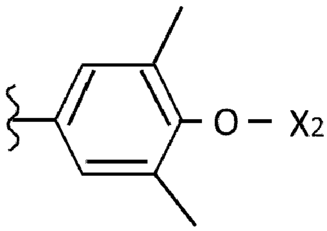

···(3)

($X_2$ in chemical formula (3) is a group selected from the following chemical formulae,

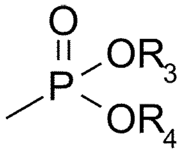 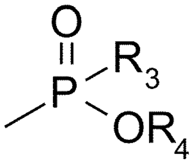 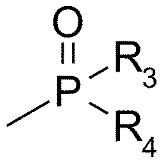

where $R_3$ and $R_4$ in $X_2$ are each, independently of one another, a group selected from a group consisting of a hydrogen atom, an alkyl group, an aryl group, an aminoalkyl group, and an arylamino group, and $R_3$ and $R_4$ may form a cyclic structure through bonding of carbon atoms included therein, with the proviso that chemical formula (3) does not substantially include a carbon-carbon double bond other than an aromatic ring double bond.

[2] The polyphenylene ether resin composition according to [1], wherein, the $X_1$ in the chemical formulae (1) and (2) is a group selected from the chemical formulae illustrated below,

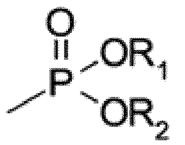 , 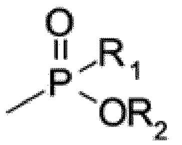 , 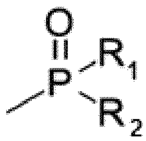

where $R_1$ and $R_2$ in the $X_1$ are each, independently of one another, a substituent having a carbon number of 1 or more.

[3] The polyphenylene ether resin composition according to [1] or [2], wherein the (A) polyphenylene ether has 0.01 to 10.0 pieces of any structural units selected from a group consisting of the chemical formulae (1), (2) and (3) per 100 monomer units for forming the (A) polyphenylene ether.

[4] The polyphenylene ether resin composition according to any one of [1] to [3], wherein mol% of a structural unit represented by the chemical formula (1) relative to a structural unit represented by the chemical formula (2) is 0 mol% to 30 mol%.

[5] The polyphenylene ether resin composition according to any one of [1] to [4], wherein the (A) polyphenylene ether includes a structural unit represented by the chemical formula(e) (1) and/or (2) and a structural unit represented by the chemical formula (3).

[6] The polyphenylene ether resin composition according to any one of [1] to [5], further comprising (C) an antioxidant, wherein content of the (C) relative to 100 parts by mass of the (A) polyphenylene ether is 0.1 to 4.0 parts by mass.

[7] The polyphenylene ether resin composition according to any one of [1] to [6], wherein the (A) polyphenylene ether or a phase containing the polyphenylene ether forms a continuous phase.

[8] The polyphenylene polyphenylene ether resin composition according to any one of [1] to [7], wherein a content of the component (B) relative to 100 parts by mass of the polyphenylene ether (A) is 0.3 to 5 parts by mass.

(Advantageous Effect)

According to this disclosure, a polyphenylene ether resin composition whose mechanical properties hardly deteriorate through high temperature aging (e.g. 145°C) while the heat resistance and mechanical and electrical properties are maintained can be provided.

DETAILED DESCRIPTION

The following provides a detailed description of an embodiment for implementation of a polyphenylene ether resin composition according to this disclosure (hereinafter, referred to as the "present embodiment). However, this disclosure is not limited to the following embodiment and may be implemented with various alterations that are within the essential scope thereof.

A polyphenylene ether resin composition according to the present embodiment is a polyphenylene resin composition containing (A) a polyphenylene ether and (B) a condensed metal phosphate. In which, when a bend elastic constant of the polyphenylene ether resin composition before aging measured in accordance with ISO-178 in an atmospheric air is taken as 100%, time required for obtaining a bend elastic constant of 115% or more through aging in which the polyphenylene ether resin composition is left at rest at 150°C is 2,000 hours or more; and a shaped article of 12.6 cm in length, 1.3 cm in width, and 1.6 mm in thickness formed from the polyphenylene ether resin composition exhibits a rate of change in chloroform-insoluble content of 15 mass% or less before and after aging in which the shaped article is left at rest for 1,000 hours at 150°C.

Further, a polyphenylene ether resin composition according to another embodiment is a polyphenylene resin composition containing (A) a polyphenylene ether and (B) a condensed metal phosphate, in which a phase containing the (A) polyphenylene ether forms a continuous phase.

The polyphenylene ether resin composition according to the present embodiment has practically favorable heat resistance, mechanical properties and electrical properties, and causes less change in mechanical properties even exposed to high temperature environments for a long time. Furthermore, a decrease in surface smoothness, electrical properties and impact resistance when exposed to high temperature environments for a long time can be inhibited.

Even when exposed to high temperature environments for a long time, the above described properties can be achieved by inhibiting degradation of polyphenylene ether. Examples of means to inhibit degradation of polyphenylene ether include, but are not specifically limited to, for example, modification of oxidation sites such as PPE terminal and/or side chain with a specific reactive compound, and containing a specific amount of a specific compound that can inhibit degradation of PPE.

In addition, modified PPE is used, and adjustement to within the above described ranges can be made through adjustment of the type and the amount of the reactive compound, the temperature and the time for a reaction of a precursor PPE with the reactive compound, extrusion conditions, and the like.

The PPE resin composition according to the present embodiment may further include, in addition to the (A) polyphenylene ether and the (B) condensed metal phosphate, (C) an antioxidant, (D) a styrene resin, (E) an elastomer and other components.

[(A) Polyphenylene ether]

The (A) polyphenylene ether (hereinafter, also referred to merely as "PPE") used for the PPE resin composition according to the present embodiment is a homopolymer or a copolymer including a repeating unit (structural unit) represented by the following chemical formula(e) (4) and/or (5) or modification thereof.

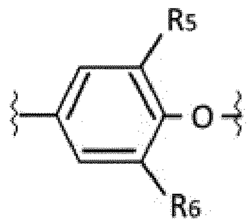

··· (4)

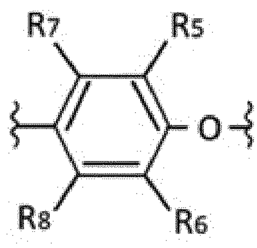

··· (5)

(In the chemical formulae (4) and (5), $R_5$, $R_6$, $R_7$ and $R_8$ each represent, independently of one another, a hydrogen atom, an alkyl group having a carbon number of 1 to 4, an aryl group having a carbon number of 6 to 9, or a halogen atom with the proviso that $R_5$ and $R_6$ are not both hydrogen.)

Representative examples of polyphenylene ether homopolymers include poly(2,6-dimethyl-1,4-phenylene) ether, poly(2-methyl-6-ethyl-1,4-phenylene) ether, poly(2,6-diethyl-1,4-phenylene) ether, poly(2-ethyl-6-n-propyl-1,4-phenylene) ether, poly(2,6-di-n-propyl-1,4-phenylene) ether, poly(2-methyl-6-n-butyl-1,4-phenylene) ether, poly(2-ethyl-6-isopropyl-1,4-phenylene) ether, poly(2-methyl-6-chloroethyl-1,4-phenylene) ether, poly(2-methyl-6-hydroxyethyl-1,4-phenylene) ether, and poly(2-methyl-6-chloroethyl-1,4-phenylene) ether.

The polyphenylene ether copolymer is a copolymer having a repeating unit represented by the chemical formula (4) and/or a repeating unit represented by the chemical formula (5) as a main repeating unit. Examples of polyphenylene ether copolymers that can be used include a copolymer of 2,6-dimethylphenol and 2,3,6-trimethylphenol, a copolymer of 2,6-dimethylphenol and o-cresol, and a copolymer of 2,6-dimethyphenol, 2,3,6-trimethylphenol, and o-cresol.

Among the (A) polyphenylene ethers, poly(2,6-dimethyl-1,4-phenylene) ether is preferable.

Preferably, a structure in which $R_5$ and $R_6$ in chemical formula (4) are respectively methyl groups (and a structure derived therefrom as described below) is included in a least part of chain of the (A) polyphenylene ether.

In the (A) polyphenylene ether, the concentration of terminal OH groups is preferably 0.6 pieces to 10.0 pieces, and more preferably 1.0 pieces to 1.8 pieces per 100 monomer units forming the polyphenylene ether.

Note that the concentration of terminal OH groups in the PPE can be calculated by NMR measurement.

The reduced viscosity (unit dL/g; measurement of chloroform solution at 30°C) of the (A) polyphenylene ether is preferably within a range of 0.25 to 0.6, and more preferably within a range of 0.35 to 0.55.

The number average molecular weight (Mn) is preferably 10,000 or more, and more preferably 14,000 or more, and is preferably 20,000 or less, and more preferably 19,000 or less. The molecular weight ranges set forth above provide an excellent balance of flame retardance, fluidity, close adherence to a filler, and the like.

In general, the (A) polyphenylene ether can be acquired as a powder that, in terms of particle size, preferably has a weight average particle diameter of 1 μm to 1,000 μm, more preferably 10 μm to 700 μm, and particularly preferably 100 μm to 500 μm. An average particle diameter of 1 μm or more is preferable from a viewpoint of ease of handling during processing and an average particle diameter of 1,000 μm or less is preferable in order to inhibit the occurrence of unmelted matter in melt-kneading.

In this specification, the weight average particle diameter is a value obtained from calculation of 50% diameter of the weight accumulation particle size distribution after sieving the particles with a micro-electromagnetic vibrating sieve (10-stage mesh with opening from 1,700 μm to 46 μm) for 30 minutes.

The (A) polyphenylene ether is a modified polyphenylene ether (which may be referred herein as a "modified PPE"). From a viewpoint of inhibiting degradation of polyphenylene ether, the above described modified PPE includes one or more structural units selected from a group consisting of the following chemical formulae (1), (2) and (3),

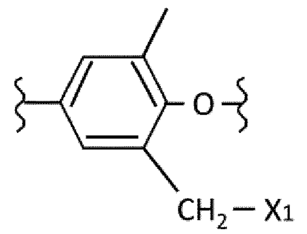

... (1)

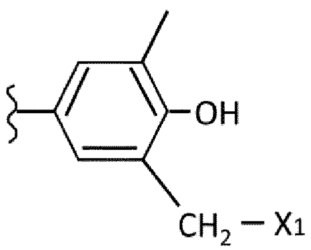

... (2)

(where $X_1$ in chemical formulae (1) and (2) is one group selected from the following chemical formulae,

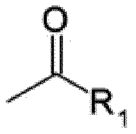 , 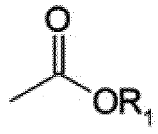 , 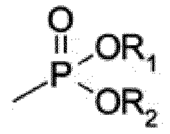 , 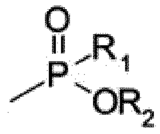 , 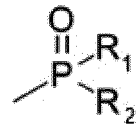

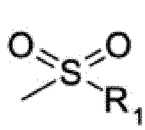 , 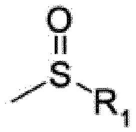

where $R_1$ and $R_2$ in $X_1$ are each independently a substituent having a carbon number of at least 1,

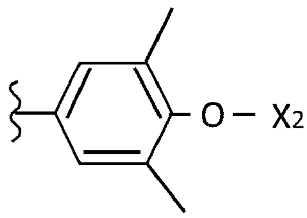

... (3)

where $X_2$ in the chemical formula (3) is a group selected from the following chemical formulae,

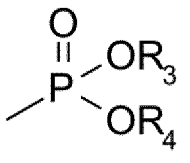 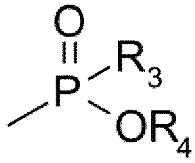 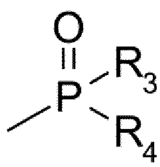

where $R_3$ and $R_4$ in $X_2$ are each independently a group selected from a group consisting of a hydrogen atom, an alkyl group, an aryl group, an alkylamino group and an arylamino group, and $R_3$ and $R_4$ may form a cyclic structure through bonding of carbon atoms contained therein, with the proviso that the chemical formula (3) does not substantially include a carbon-carbon double bond other than a double bond of aromatic ring). Further, from a viewpoint of achieving both heat aging resistance and surface appearance of a shaped article, preferably, the $X_1$ in the chemical formulae (1) and (2) is one group selected from the following chemical formulae,

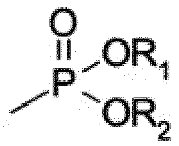 , 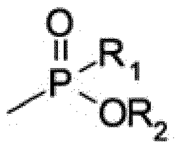 , 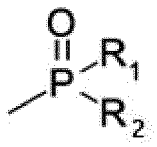

and more preferably, $R_1$ and $R_2$ in $X_1$ are each independently a substituent having a carbon number of at least 1.

Further preferably, the above described modified polyphenylene ether is a polyphenylene ether including the structural unit represented by the above described chemical formula(e) (1) and/or (2) and the structural unit represented by the above described chemical formula (3).

The structure of $R_1$ and $R_2$ in the $X_1$ may preferably be a substituent having no reactive functional group. When $R_1$ and $R_2$ have reactive substituents, these reactive substituents cause crosslinking reaction when a resin composition is exposed to high temperatures over a long period, which may deteriorate physical properties after aging. Examples of reactive substituent include a hydroxyl group, an alkoxy group, an amino group, a vinyl group, a carbonyl group, and the like. Further, examples of the structure of $R_1$ and $R_2$ include a structure in which $R_1$ and $R_2$ are coupled (e.g. for $R_1$ and $R_2$, carbon atoms included therein may be bonded to each other to form a cyclic structure, with the proviso that, other than double bond of aromatic ring, carbon-carbon-double bond is not substantially included) and a structure in which nitrogen atoms and oxygen atoms are included.

Examples of $R_1$ and $R_2$ include, for example, a chain or cyclic alkyl group or aryl group having a carbon number

of 1 to 30, and specifically include a methyl group, an ethyl group, an n-propyl group, an i-propyl group, an n-butyl group, a t-butyl group, a hexyl group, a cyclohexyl group, an octyl group, a decyl group, a dodecyl group, a hexadecyl group, an octadecyl group, a phenyl group, a tolyl group, a naphtyl group, and the like.

As a structure of $R_3$ and $R_4$ in the $X_2$, an alkyl group, an aryl group and an alkylamino group having no carbon-carbon double bond excepting aromatic ring is preferable, and a structure in which two substituents are coupled and a structure in which nitrogen atoms and oxygen atoms are included may be used.

Examples of an alkyl group in the $R_3$ and $R_4$ include, for example, an alkyl group having a carbon number of 1 to 30, and specifically include a methyl group, an ethyl group, an n-propyl group, an i-propyl group, an n-butyl group, a t-butyl group, a hexyl group, a cyclohexyl group, an octyl group, a decyl group, a dodecyl group, a hexadecyl group, an octadecyl group, and the like.

Further, examples of an aryl group in the $R_3$ and $R_4$ include, for example, an aryl group having a carbon number of 6 to 30, and specifically include a phenyl group, a tolyl group, a dimethylphenyl group, a trimethylpnenyl group, a naphtyl group, a trityl group, and the like.

Moreover, examples of an alkyl group in the above described alkylamino group include, for example, an alkyl group having a carbon number of 1 to 30, and specifically include a methyl group, an ethyl group, an n-propyl group, an i-propyl group, a butyl group, a hexyl group, a cyclohexyl group, an octyl group, a decyl group, a dodecyl group, a hexadecyl group, an octadecyl group, and the like, Further, examples of the above described alkylamino group include a methylamino group, a dimethylamino group, an ethylamino group, a dietylamino group, an isopropylamino group, a diisopropylamino group, a butylamino group, a dibutylamino group, an octylamino group, a dioctylamino group, and the like.

Further, examples of an aryl group in the above described arylamino group include the same groups as described above, and specifically include a phenylamino group, a diphenylamino group, a tolylamino group, a ditolylamino group, a dimethylphenylamino group, a trimethylphenylamino group, a naphtylamino group, a tritylamino group, and the like.

Preferably, a modified PPE having a structural unit represented by the chemical formula (3) does not substantially have a carbon-carbon double bond other than an unsaturated double bond of aromatic ring in the terminal structural unit represented by the chemical formula (3). Among others, preferably, the above described modified PPE does not substantially have a carbon-carbon double bond other than an unsaturated double bond of aromatic ring in a polyphenylene ether chain. The carbon-carbon double bond structure has a high thermal reactivity, and when the structure is exposed to high temperatures over a long period, the carbon-carbon double bond causes an intermolecular or intramolecular crosslinking reaction, which may lead to a decrease in heat aging resistance.

The number of carbon-carbon double bonds other than aromatic ring can be measured, by $^{1}$H-NMR method measured under the conditions described in Examples below, from a doublet peak, that is different from a precursor polyphenylene ether appeared in 3.5 to 5.5 ppm. Note that, when the number of carbon-carbon double bonds other than aromatic ring is 0.01 pieces or more per 100 monomer units forming the (A) polyphenylene ether, the number can be detected by the $^{1}$H-NMR method measured under the conditions described in Examples below.

The description of "does not substantially have a carbon-carbon double bond other than an unsaturated double bond of aromatic ring in the terminal structural unit represented by the chemical formula (3)" means that the number of carbon-carbon double bond other than aromatic ring is less than 0.01 pieces, preferably 0.005 pieces or less per 100 monomer units forming the (A) polyphenylene ether, and more preferably, no doublet peak different from the precursor polyphenylene ether is detected at 3.5 to 5,5 ppm in the $^{1}$H-NMR measured under the conditions described in Examples described below.

The following describes the action and effect of (A) polyphenylene ether.

When a conventional polyphenylene ether is exposed to high temperatures over a long period, it may cause a crosslinking reaction, which has a significant effect on a decrease in the heat aging resistance of the polyphenylene ether and a composition thereof. Therefore, in this disclosure, by using a modified PPE whose terminal and/or side chain, which will be a crosslinking point for PPE to crosslink, are blocked, or by including a specific amount of specific compound that inhibits cross-linking reaction of PPE, a heat aging resistance over a long period can be further improved without having an effect on the mechanical properties.

From a viewpoint of further excellent heat aging resistance, a modified PPE is more preferable as the (A) polyphenylene ether.

The following describes the action and effect when the modified PPE is used.

When the unmodified polyphenylene ether is used, when it is exposed to high temperatures over a long period, methyl groups in terminal units (hereinafter also referred to as "terminal methyl groups"), methyl groups in intermediate units (hereinafter also referred to as "side chain methyl groups") and hydroxy groups in terminal units (hereinafter also referred to as "terminal hydroxy groups") may cause an oxidative crosslinking reaction, which significantly lowers heat aging resistance of the polyphenylene ether and a resin composition thereof. More specifically, generation of radicals tends to occur comparatively easily at terminal methyl groups, side chain methyl groups, and terminal hydroxy groups, and the generated radicals may act as a cause of oxidative crosslinking. However, in the modified polyphenylene ether,

terminal methyl groups, side chain methyl groups, and terminal hydroxy groups that act as oxidation sites are in a blocked state through substitution with a specific molecule. This can inhibit crosslinking reaction of the terminal methyl groups, side chain methyl groups, and terminal hydroxy groups, and thereby significantly improve heat aging resistance of the polyphenylene ether. Further, as a result of using the modified PPE, it is possible to further inhibit changes in structure at terminals (terminal methyl groups, side chain methyl groups and terminal hydroxy groups) of a molecular chain while the PPE resin composition is in an extruder or molding machine, and thus it is possible to prevent coloring and improve external appearance of a shaped article. It is preferable that blocking with a specific molecule is performed to a greater degree at the terminals because terminal methyl groups and terminal hydroxy groups have greater radical generating ability as oxidation sites than side chain methyl groups.

In the modified PPE, from a viewpoint of less possibilities of change in the mechanical properties and change in degradation of surface smoothness, external appearance and electrical properties even after heat aging over a long period (e.g. 145°C to 150°C, 500 hours or more), the number of structural units selected from the group consisting of chemical formulae (1), (2) and (3) is preferably within a range of 0.01 units to 10.0 units, more preferably within a range of 0.03 units to 5.0 units, and even more preferably within a range of 0.03 units to 3.0 units, per 100 monomer units forming the (A) polyphenylene ether.

In the modified PPE, from a viewpoint of less possibilities of change in the mechanical properties and change in degradation of surface smoothness, external appearance and electrical properties even after heat aging over a long period (e.g. 145°C to 150°C, 500 hours or more), a ratio of structural units represented by chemical formula (1) relative to structural units represented by chemical formula (2) ((mol of structural units represented by chemical formula (1)/mol of structural units represented by chemical formula (2)) × 100) is preferably 0 mol% to 30 mol%, and more preferably 0 mol% to 27 mol%.

In the modified PPE, preferably, per 100 monomer units forming polyphenylene ether, 0.1 units to 10.0 units of structural units represented by chemical formulae (1) and/or (2) and/or 0.01 units to 5.0 units of structural units represented by chemical formula (3) are included. Within the above described range, heat aging resistance can be improved without deterioration of mechanical properties.

The number of structural units represented by chemical formulae (1) and/or (2) per 100 monomer units forming the polyphenylene ether is more preferably within a range of 0.1 units to 3.0 units, and even more preferably within a range of 0.1 units to 1.0 unit.

The number of structural units represented by chemical formula (3) per 100 monomer units forming the polyphenylene ether is more preferably within a range of 0.01 units to 3.0 units, and even more preferably within a range of 0.01 units to 1.0 units.

<Method of synthesis of modified polyphenylene ether>

A modified PPE is preferably obtained by causing a precursor polyphenylene ether (hereinafter also referred to as a "precursor PPE") to react with a reactive compound through heating.

Examples of precursor PPE include homopolymer or copolymer having a unit of repeating unit structure (monomer unit) represented by chemical formula(e) (4) and/or (5).

Examples of homopolymer of precursor PPE are the same as those for the above described polyphenylene ether. Examples of copolymer of precursor PPE are the same as those for the above described polyphenylene ether. Among them, a copolymer of 2,6-dimethylphenol and 2,3,6-trimethylphenol and a copolymer of 2,6-dimethylphenol and o-cresol are preferable.

Preferably, the structure of chemical formula (3) is obtained by causing a terminal OH group of polyphenylene ether to react with a reactive compound.

The precursor PPE is preferably a precursor polyphenylene ether in which terminal group and/or side chain group represented by chemical formulae (7) and (8) described below are included in a polyphenylene ether chain.

Through inclusion of structural units of the following chemical formulae (7) and (8) in the precursor PPE, the modified polyphenylene ether can be obtained with sufficient efficiency (specifically, in production of modified PPE, the modified PPE can be obtained with sufficient efficiency, because, via the precursor PPE, the $CH_2$-Y part of the structures of chemical formulae (7) and (8) is selectively cleaved and undergoes a substitution reaction with the reactive compound described below). Moreover, since the precursor PPE can be easily synthesized from an unsubstituted PPE, the modified PPE can be efficiently synthesized via the precursor PPE.

Furthermore, the total content of the above described structural units in the polyphenylene ether chain of the precursor PPE is preferably 0.1 units to 10 units per 100 monomer units forming the polyphenylene ether.

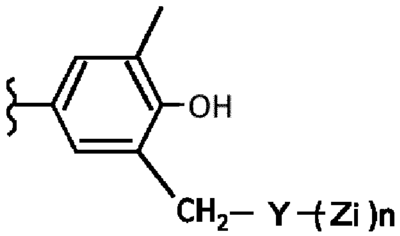

··· (7)

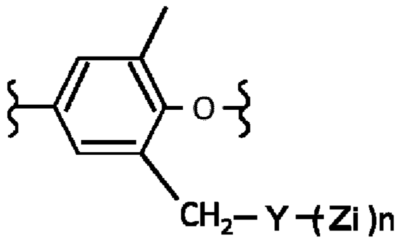

··· (8)

(In chemical formulae (7) and (8), Y represents a N atom or an O atom, and Zi represents a saturated or unsaturated hydrocarbon group that has a carbon number of 1 to 20 and that is cyclic or chain-shaped (i.e., linear or branched). Furthermore, in chemical formulae, i and n are each an integer of 1 or 2, where $Z_1$ and $Z_2$ may be the same or different and may form a cyclic structure in conjunction with Y bonded thereto through bonding therebetween.)

No specific limitations are placed on the method used to produce the precursor polyphenylene ether including structural units of chemical formulae (7) and (8). Examples of methods that can be used include a method in which (a1) compound such as an amine, an alcohol, or morpholine is added and caused to react in a polymerization reaction of a polyphenylene ether and a method in which an unsubstituted polyphenylene ether that has been polymerized is stirred at 20°C to 60°C, and preferably at 40°C, in a solvent such as toluene in which the PPE is soluble, and the above described (a1) compound is added thereto and is caused to react.

Although no specific limitations are placed on the (a1) compound, specific examples thereof include primary amines such as n-propylamine, isopropylamine, n-butylamine, isobutylamine, sec-butylamine, n-hexylamine, n-octylamine, 2-ethylhexylamine, cyclohexylamine, laurylamine, and benzylamine; secondary amines such as diethylamine, di-n-propylamine, di-n-butylamine, diisobutylamine, di-n-octylamine, piperidine, and 2-pipecoline; alcohols such as methanol, ethanol, n-propanol, isopropanol, n-butanol, isobutanol, and sec-butanol; and morpholine.

No specific limitations are placed on the method used to obtain the modified polyphenylene ether. Examples of methods include a method in which a subsequently described reactive compound is added in polymerization of a polyphenylene ether and polymerization of the modified polyphenylene ether is carried out, a method in which a small amount of a monomer substituted with a subsequently described reactive compound is added in polymerization of a polyphenylene ether and polymerization of the modified polyphenylene ether is carried out, and a method in which a polyphenylene ether and a reactive compound are melt-kneaded and caused to react. More specific examples include a method in which the (a1) compound is added and caused to react in polymerization of PPE, and a subsequently described reactive compound is then caused to react, a method in which a small amount of 2,6-dimethylphenol that has been substituted with the (a1) compound is added and caused to react in polymerization of PPE, and a method in which a precursor PPE is obtained and the precursor PPE and a reactive compound are subsequently melt-kneaded and caused to react (i.e., the precursor PPE and the reactive compound are, for example, melt-kneaded in production of a resin composition by melt-kneading using the precursor PPE). Among them, from a viewpoint of efficient reaction over a short period, preferably, after a precursor PPE is obtained, the precursor PPE and a reactive compound are melt-kneaded and caused to react.

«Reactive compound»

Examples of reactive compounds that can be used to obtain the above described modified polyphenylene ether include, but are not specifically limited to, phosphonic acids, phosphonic acid esters, phosphinic acids, phosphinic acid esters, monocarboxylic acids, sulfonic acids, sulfinic acids, and carbonates.

Examples of phosphonic acids that can be used include, for example, phosphonic acid (phosphorus acid), methylphosphonic acid, ethylphosphonic acid, vinylphosphonic acid, decylphosphonic acid, phenylphosphonic acid, benzylphosphonic acid, aminomethylphosphonic acid, methylenediphosphonic acid, 1-hydroxyethane-1,1-diphosphonic

acid, 4-methoxyphenylphosphonic acid, and propylphosphonic anhydride.

Examples of phosphonic acid esters that can be used include, for example, dimethyl phosphonate, diethyl phosphonate, bis(2-ethylhexyl) phosphonate, dioctyl phosphonate, dilauryl phosphonate, dioleyl phosphonate, diphenyl phosphonate, dibenzyl phosphonate, dimethyl methylphosphonate, diphenyl methylphosphonate, dioctyl methylphosphonate, diethyl ethylphosphonate, dioctyl ethylphosphonate, diethyl benzylphosphonate, dimethyl phenylphosphonate, diethyl phenylphosphonate, dipropyl phenylphosphonate, dioctyl phenylphosphonate, diethyl (methoxymethyl)phosphonate, dioctyl (methoxymethyl)phosphonate, diethyl vinylphosphonate, diethyl hydroxymethylphosphonate, dimethyl (2-hydroxyethyl)phosphonate, dioctyl (methoxymethyl)phosphonate, diethyl p-methylbenzylphosphonate, dioctyl p-methylbenzylphosphonate, diethylphosphonoacetic acid, ethyl diethylphosphonoacetate, tert-butyl diethylphosphonoacetate, dioctyl diethylphosphonate, diethyl (4-chlorobenzyl)phosphonate, dioctyl (4-chlorobenzyl)phosphonate, diethyl cyanophosphonate, diethyl cyanomethylphosphonate, dioctyl cyanophosphonate, diethyl 3,5-di-tert-butyl-4-hydroxybenzylphosphonate, dioctyl 3,5-di-tert-butyl-4-hydroxybenzylphosphonate, and diethyl (methylthiomethyl)phosphonate.

Examples of phosphinic acids that can be used include, for example, dimethylphosphinic acid, ethylmethylphosphinic acid, diethylphosphinic acid, methyl-n-propylphosphinic acid, diphenylphosphinic acid, dioleylphosphinic acid, 9,10-dihydro-9-oxa-10-phosphaphenanthrene-10-oxide, and derivatives thereof.

Examples of phosphinic acid esters that can be used include, for example, methyl dimethylphosphinate, ethyl dimethylphosphinate, n-butyl dimethylphosphinate, cyclohexyl dimethylphosphinate, vinyl dimethylphosphinate, phenyl dimethylphosphinate, methyl ethylmethylphosphinate, ethyl ethylmethylphosphinate, n-butyl ethylmethylphosphinate, cyclohexyl ethylmethylphosphinate, vinyl ethylmethylphosphinate, phenyl ethylmethylphosphinate, methyl diethylphosphinate, ethyl diethylphosphinate, n-butyl diethylphosphinate, cyclohexyl diethylphosphinate, vinyl diethylphosphinate, phenyl diethylphosphinate, methyl diphenylphosphinate, ethyl diphenylphosphinate, n-butyl diphenylphosphinate, cyclohexyl diphenylphosphinate, vinyl diphenylphosphinate, phenyl diphenylphosphinate, methyl methyl-n-propylphosphinate, ethyl methyl-n-propylphosphinate, n-butyl methyl-n-propylphosphinate, cyclohexyl methyl-n-propylphosphinate, vinyl methyl-n-propylphosphinate, phenyl methyl-n-propylphosphinate, methyl dioleylphosphinate, ethyl dioleylphosphinate, n-butyl dioleylphosphinate, cyclohexyl dioleylphosphinate, vinyl dioleylphosphinate, and phenyl dioleylphosphinate.

Examples of monocarboxylic acids that can be used include, for example, monocarboxylic acids such as formic acid, acetic acid, propionic acid, butyric acid, hexanoic acid, heptanoic acid, octanoic acid, nonanoic acid, decanoic acid, dodecanoic acid, tetradecanoic acid, octadecanoic acid, docosanoic acid, hexacosanoic acid, octadecenoic acid, docosenoic acid, and isooctadecanoic acid, alicyclic monocarboxylic acids such as cyclohexane carboxylic acid, aromatic monocarboxylic acids such as benzoic acid and methylbenzene carboxylic acid, hydroxy aliphatic monocarboxylic acids such as hydroxypropionic acid, hydroxyoctadecanoic acid, and hydroxyoctadecenoic acid, and sulfur-containing aliphatic monocarboxylic acids such as alkyl thiopropionic acid.

Examples of sulfonic acids that can be used include, for example, alkyl sulfonic acids, benzenesulfonic acid, naphthalenesulfonic acid, anthraquinonesulfonic acid, camphorsulfonic acid, and derivatives of the preceding sulfonic acids. These sulfonic acids may be monosulfonic acids, disulfonic acids, or trisulfonic acids. Examples of derivatives of benzenesulfonic acid that can be used include phenolsulfonic acid, styrenesulfonic acid, toluenesulfonic acid, and dodecylbenzenesulfonic acid. Examples of derivatives of naphthalenesulfonic acid that can be used include 1-naphthalenesulfonic acid, 2-naphthalenesulfonic acid, 1,3-naphthalenedisulfonic acid, 1,3,6-naphthalenetrisulfonic acid, and 6-ethyl-1-naphthalenesulfonic acid. Examples of derivatives of anthraquinonesulfonic acid that can be used include anthraquinone-1-sulfonic acid, anthraquinone-2-sulfonic acid, anthraquinone-2,6-disulfonic acid, and 2-methylanthraquinone-6-sulfonic acid.

Examples of sulfinic acids that can be used include, for exmaple, alkane sulfinic acids such as ethanesulfinic acid, propanesulfinic acid, hexanesulfinic acid, octanesulfinic acid, decanesulfinic acid, and dodecanesulfinic acid; alicyclic sulfinic acids such as cyclohexanesulfinic acid and cycloctanesulfinic acid; and aromatic sulfinic acids such as benzenesulfinic acid, o-toluenesulfinic acid, p-toluenesulfinic acid, ethylbenzenesulfinic acid, decylbenzenesulfinic acid, dodecylbenzenesulfinic acid, chlorobenzenesulfinic acid, and naphthalenesulfinic acid.

Examples of carbonates that can be used include, for example, dimethyl carbonate, diethyl carbonate, diisopropyl carbonate, dibutyl carbonate, dihexyl carbonate, dioctyl carbonate, diphenyl carbonate, methyl ethyl carbonate, methyl phenyl carbonate, ethyl phenyl carbonate, butyl phenyl carbonate, and ditolyl carbonate.

From a viewpoint of reactivity, a phosphoric compound is preferably as the reactive compound. Specifically, the reactive compound is more preferably diphenyl phosphonate, dioleyl phosphonate, dioctyl phosphonate, diphenylphosphinic acid, dioleylphosphinic acid, and the like, and is even more preferably 9,10-dihydro-9-oxa-10-phosphaphenanthrene-10-oxide. Through use of a modified polyphenylene ether obtained using 9,10-dihydro-9-oxa-10-phosphaphenanthrene-10-oxide, it is possible to improve heat aging resistance, and it is also possible to further improve fluidity during melt-kneading of the resin composition in which the PPE is used.

(A) Polyphenylene ether may include, for example, an unmodified PPE and the reactive compound described above.

For the above described chemical formulae (4) and (5) of (A) polyphenylene ether, at least one selected from a group consisting of the above described $R_5$, $R_6$ $R_7$ and $R_8$ may be a group represented by $-CH_2-Y-(Zi)_n$ of the chemical formulae (7) and (8). The structure represented by the chemical formulae (7) and (8) is preferable.

The content of (A) polyphenylene ether in the PPE resin composition according to the present embodiment is preferably from 30 mass% to 90 mass%. As a result of content of (A) being 30 mass% or more, the mechanical strength can be satisfied, and as a result of content of (A) being 90 mass% or less, fluidity during melt-kneading can be ensured.

[(B) Condensed metal phosphate]

In the PPE resin composition according to the present embodiment, it is preferable to use (B) condensed metal phosphate from a viewpoint of inhibition of changes in mechanical properties due to high temperature aging while heat resistance and mechanical and electrical properties are maintained. Example of (B) condensed metal phosphate used in the PPE resin composition according to the present embodiment include metal salt such as polyphosphoric acid, metaphosphoric acid and ultra phosphoric acid.

As metals in (B) condensed metal phosphate, althlugh any metals may be used, alkali metal and alkali-earth metal are preferable, lithium, beryllium, sodium, magnesium, potassium and calcium are more preferable, and sodium, magnesium and potassium are even more preferable. Such condensed metal phosphate has a large interaction with aromatic compound and a high metal capturing effect, and in addition to this, has an effect of stabilizing an aldehyde caused by oxidization of a polyphenylene ether, which results in a large effect of improved heat aging resistance of resin and flame retardant. Stabilization of aldehyde caused by oxidation will inhibit oxidative crosslinking of polyphenylene ether, and thus inhibit embrittlement of resin.

The polymerization degree of condensed metal phosphate is not specifically limited, and in a range of polymerization degree of 2 to 50, structures each having the same polymerization degree may be present, or structures each having a different polymerization degree may be mixed. Further, metaphosphoric acid structure and polyphosphoric acid structure may be mixed. Moreover, the condensed metal phosphate may contain a monomer metal phosphate in a range of 0% to 10%.

The content of (B) condensed metal phosphate is preferably 0.1 parts by mass or more, and more preferably 0.3 parts by mass or more, relative to 100 parts by mass of (A) polyphenylene ether. With the above described range, an enhanced heat aging resistance can be obtained.

On the other hand, the content of (B) condensed metal phosphate relative to 100 parts by mass of polyphenylene ether resin composition is preferably 5 parts by mass or less, more preferably 4 parts by mass or less, and even more preferably 3 parts by mass or less. With the above described range, a composition having excellent mechanical properties such as impact resistance can be obtained.

Further, when a specific amount of condensed metal phosphate is combined with a specific amount of subsequently described antioxidant, both higher mechanical properties such as impact resistance and higher heat aging resistance can be achieved.

[(C) Antioxidant]

Both primary antioxidants that act as radical chain inhibitors and secondary antioxidants that have an effect of breaking down peroxides can be used as an antioxidant that may be used in the PPE resin composition according to the present embodiment. In other words, through the use of an antioxidant, radicals that may arise at terminal methyl groups or side chain methyl groups when the polyphenylene ether is exposed to high temperatures for a long time can be captured (primary antioxidant) or peroxides that may arise at terminal methyl groups or side chain methyl groups due to the above described radicals can be broken down (secondary antioxidant). Consequently, oxidative crosslinking of the polyphenylene ether can be prevented.

Hindered phenol antioxidants can mainly be used as primary antioxidants.

Specific examples of hindered phenol antioxidants that can be used include 2,6-di-t-butyl-4-methylphenol, pentaerythritol tetrakis[3-(3,5-di-t-butyl-4-hydroxyphenyl)propionate], n-octadecyl-3-(3,5-di-t-butyl-4-hydroxyphenyl)propionate, 2,2'-methylenebis(4-methyl-6-t-butylphenol), 2,6-di-t-butyl-4-(4,6-bis(octylthio)-1,3,5-triazin-2-ylamino)phenol, 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 4,4'-butylidenebis(3-methyl-6-t-butylphenol), 4,4'-thiobis(3-methyl-6-t-butylphenol), alkylated bisphenol, tetrakis[methylene-3-(3,5-di-t-butyl-4-hydroxyphenyl)propionate]methane, and 3,9-bis[2-{3-(3-t-butyl-4-hydroxy-5-methylphenyl)-propionyloxy)-1,1-dimethylethyl]-2,4,8,10-tetraoxyspiro[5,5]undecane.

Phosphoric antioxidants and sulfuric antioxidants can mainly be used as secondary antioxidants.

Specific examples of phosphoric antioxidants that can be used include trisnonylphenyl phosphite, triphenyl phosphite, tris(2,4-di-t-butylphenyl) phosphite, bis(2,4-di-t-butylphenyl)pentaerythritol-diphosphite, bis(2,6-di-t-butyl-4-methylphenyl)pentaerythritol-diphosphite, and 3,9-bis(2,6-di-tert-butyl-4-methylphenoxy)-2,4,8,10-tetraoxa-3,9-diphosphaspiro[5,5]undecane.

Specific examples of sulfuric antioxidants that can be used include dilauryl 3,3'-thiodipropionate, dimyristyl 3,3'-thiodipropionate, distearyl 3,3'-thiodipropionate, pentaerythrityl tetrakis(3-laurylthiopropionate), ditridecyl 3,3'-thiodipropionate, 2-mercaptobenzimidazole, and 2,6-di-tert-butyl-4-(4,6-bis(octylthio)-1,3,5-triazin-2-ylamino)phenol.

Furthermore, examples of other antioxidants that can be used together with the antioxidants described above include metal oxides or sulfides such as zinc oxide, magnesium oxide, and zinc sulfide.

Of these antioxidants, secondary antioxidants are effective for improving long-term properties of the polyphenylene ether resin, and among secondary antioxidants, phosphoric antioxidants are preferable.

The total additive amount of (C) antioxidant relative to 100 parts by mass of (A) polyphenylene ether is preferably 0.1 parts by mass to 4.0 parts by mass, more preferably 0.1 parts by mass to 3.0 parts by mass, and even more preferably 0.1 parts by mass to 1.5 parts by mass. Within these ranges, a resin composition having excellent initial and post-long-term heat aging flame retardance and excellent mechanical strength can be obtained.

[(D) Styrene resin]

The PPE resin composition according to the present embodiment may contain (D) styrenic resin with the aim of adjusting heat resistance or molding fluidity. Commonly known styrenic resins can be used as (D) styrenic resin without any specific limitations. For example, a homopolymer of a styrenic compound or a copolymer obtained through polymerization of a styrenic compound and a compound that is copolymerizable with the styrenic compound in the presence or absence of a rubbery polymer may be used

Examples of the styrenic compound include, but are not specifically limited to, styrene, $\alpha$-methylstyrene, 2,4-dimethylstyrene, monochlorostyrene, p-methylstyrene, p-tert-butylstyrene, and ethylstyrene. Of these styrenic compounds, styrene is preferable from a viewpoint of practicality of raw material.

Examples of the compound that is copolymerizable with the styrenic compound include methacrylic acid esters such as methyl methacrylate and ethyl methacrylate; unsaturated nitrile compounds such as acrylonitrile and methacrylonitrile; and acid anhydrides such as maleic anhydride.

Polystyrene is preferable as (D) styrenic resin from a viewpoint of miscibility with the polyphenylene ether. Among polystyrenes, rubber-reinforced polystyrene is preferable from a viewpoint of enhancing impact resistance, whereas general purpose polystyrene is preferable from a viewpoint of enhancing external appearance of a shaped article.

The rubber-reinforced polystyrene may be a polymer that is obtained through polymerization of a styrenic compound and a compound that is copolymerizable with the styrenic compound in the presence of a rubbery polymer.

The content of the compound that is copolymerizable with the styrenic compound in the rubber-reinforced polystyrene is preferably 20 mass% or less, and more preferably 15 mass% or less relative to 100 mass%, in total, of the styrenic compound and the compound that is copolymerizable with the styrenic compound.

Examples of rubbery polymers that may be used include, but are not limited to, a conjugated diene rubber, a copolymer of a conjugated diene and an aromatic vinyl compound, an ethylene-propylene copolymer rubber, a polybutadiene, a styrene-butadiene random copolymer and a styrene-butadiene block copolymer, and a rubber compnent obtained through partial or almost complete hydrogenation of any of the preceding examples.

Example of the rubber-reinforced polystyrene is high impact polystyrene (HIPS). A high impact polystyrene in which a styrene-butadiene block copolymer is used as a rubbery polymer is preferable.

The rubber particles of the rubbery polymer contained in the HIPS may, for example, have a salami structure (multicell structure) and polystyrene core (single cell structure).

The term "salami structure" refers to a structure in which rubber particles dispersed in a polystyrene matrix have a cross-section similar to salami sausage. In other words, this is a structure in which polystyrene particles are contained in a honeycomb-like form within a rubber particle phase having a thin outer layer.

The term "polystyrene core" refers to a form in which rubber particles dispersed in a polystyrene matrix have a single cell structure (core-shell structure).

The rubber-reinforced polystyrene can be produced by bulk polymerization or bulk suspension polymerization, and the form of the rubber particles can be controlled by controlling the stirring state during a polymerization step and the mixing state in production of rubber particles.

The content of (D) styrenic resin in the PPE resin composition according to the present embodiment is preferably within a range of 0 mass% to 70 mass%, more preferably within a range of 5 mass% to 50 mass%, and even more preferably within a range of 10 mass% to 40 mass%, relative to 100 mass% of the resin composition. From a viewpoint of enhancing shaping fluidity of the resin composition, it is preferable that (D) styrenic resin is included, and it is preferable that (D) the styrenic resin is included in the proportion of 70 mass% or less from a viewpoint of sufficiently maintaining heat resistance.

[(E) Elastomer component]

The resin composition according to the present embodiment may further contain (E) elastomer component (hereinafter, occasionally referred to as "(E) elastomer) with the aim of enhancing the impact resistance.
Commonly known elastomer components may be used as (E) elastomer. From a viewpoint of miscibility with the (A) polyphenylene ether and heat resistance, it is preferable that a block copolymer having a styrene block and a hydrogenated conjugated diene compound block (hereinafter, also referred to as a "styrene block-hydrogenated conjugated diene compound block copolymer") is included.
The conjugated diene compound block is preferably hydrogenated with a percentage hydrogenation of 50% or more, more preferably 80% or more, and even more preferably 95% or more from a viewpoint of thermal stability.
Examples of the conjugated diene compound block include, but are not limited to, for example, polybutadiene, polyisoprene, poly(ethylene-butylene), poly(ethylene-propylene), and vinyl-polyisoprene. The above described conjugated diene compound blocks may be used individually, or two or more types of conjugated diene compound blocks may be used in combination.
The arrangement of repeating units composing the block copolymer may be a linear type or a radial type. Moreover, polystyrene blocks and rubber intermediate blocks may form a two, three, or four block structure. Among such block copolymers, a triblock linear-type block copolymer formed by a polystyrene-poly(ethylene-butylene)-polystyrene structure is preferable from a viewpoint of sufficiently exhibiting the effects that are desired in the present embodiment. Note that the conjugated diene compound blocks may include butadiene units within a range not exceeding 30 mass%.
The styrene block-hydrogenated conjugated diene compound block copolymer that may be used in the present embodiment preferably has a weight average molecular weight Mw within a range of 45,000 to 300,000, more preferably within a range of 55,000 to 280,000, and even more preferably within a range of 70,000 to 250,000 from a viewpoint of enhancing impact resistance. The weight average molecular weight is preferably 50,000 or more from a viewpoint of imparting sufficient impact resistance and is preferably 300,000 or less from a viewpoint of shaped article fluidity, retention of external appearance, and miscibility.
The styrene block-hydrogenated conjugated diene compound block copolymer that may be used in the present embodiment preferably has a bound styrene content within a range of 20 mass% to 80 mass%, more preferably within a range of 30 mass% to 60 mass%, and even more preferably within a range of 30 mass% to 45 mass%. The bound styrene content of the styrene block-hydrogenated conjugated diene compound block copolymer is preferably 20 mass% or more from a viewpoint of miscibility and is preferably 80 mass% or less from a viewpoint of imparting impact resistance.
The content of (E) elastomer that may be used in the resin composition according to the present embodiment is preferably within a range of 1 mass% to 15 mass%, more preferably within a range of 3 mass% to 12 mass%, and even more preferably within a range of 5 mass% to 12 mass% in 100 mass% of the resin composition. The content of (E) elastomer is preferably 1 mass% or more from a viewpoint of imparting further excellent impact resistance, and is preferably 15 mass% or less from a viewpoint of heat resistance and rigidity retention.

[Other components]

The PPE resin composition according to the present embodiment may further contain antioxidants other than (B), ultraviolet absorbers, antistatic agents, lubricants, release agents, and the like to the extent that heat resistance and mechanical properties of the resin composition, surface appearance and heat aging resistance of a shaped article, and the like are not significantly reduced.
In terms of content of the above described other components in the PPE resin composition according to the present embodiment, each component may be contained preferably within a range of 0.001 mass% to 3 mass%, more preferably within a range of 0.01 mass% to 1.5 mass%, and even more preferably within a range of 0.1 mass% to 1.0 mass%, relative to 100 mass% of the resin composition. From a viewpoint of exhibiting a sufficient additive effect, the content is preferably 0.001 mass% or more, and from a viewpoint of adequate shaped article external appearance and retention of physical properties, the content is preferably 3 mass% or less.
Furthermore, the PPE resin composition according to the present embodiment may optionally include other thermoplastic resins.
The PPE resin composition according to the present embodiment may contain an inorganic filler as a reinforcement agent with the aim of improving mechanical strength. The inorganic filler used as a reinforcement agent is a material that is commonly used to reinforce thermoplastic resins and examples thereof include glass fiber, carbon fiber, glass flake, talc, chlorite, mica, and the like.
The content of the inorganic filler in the PPE resin composition according to the present embodiment relative to 100 mass% of the resin composition is preferably 50 mass% or less, more preferably within a range of 0.5 mass% to 40 mass%, and even more preferably within a range of 1 mass% to 30 mass%. Inclusion of an inorganic filler is preferable

from a viewpoint of enhancing mechanical strength, and the content of the inorganic filler is preferably 50 mass% or less from a viewpoint of adequate shaped article external appearance and retention of shaping fluidity.

The present disclosure also includes the PPE resin composition including (A) polyphenylene ether. In this case, from a viewpoint of heat aging resistance, the PPE resin composition that includes (A) polyphenylene ether and (B)condensed metal phosphate is preferable, and the PPE resin composition may further include (C) antioxidant, (D) styrene resin and/or (E) elastomer.

The PPE resin composition including (A) component, (D) component and (E) component can achieve an excellent balance among heat resistance, moldability and impact resistance. A modified PPE is preferable as (A) component. More preferably, the precursor PPE and the $X_1$ of chemical formulae (1) and (2) are one group selected from the following chemical formulae;

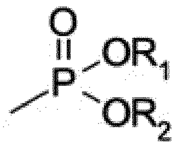 , 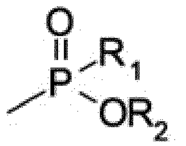 , 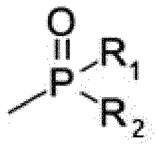

where $R_1$ and $R_2$ in $X_1$ are each, independently of one another, a substituent having a carbon number of 1 or more. From a viewpoint of achieving both heat aging resistance and external appearance, the PPE resin composition may preferably include a modified PPE in which the $X_1$ in chemical formulae (1) and (2) is one group selected from the following chemical formulae,

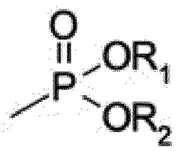 , 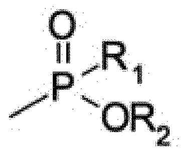 , 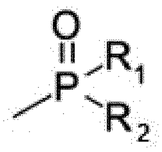

where $R_1$ and $R_2$ in $X_1$ are each, independently of one another, a substituent having a carbon number of 1 or more; and (B) condensed metal phosphate.

With respect to the components of (A), (B), (C), (D) and (E), they are as those described above.

[Physical properties]

The physical properties of the PPE resin composition according to the present embodiment are described below.

(Change in bend elastic constant through high-temperature aging)

In the PPE resin composition according to the present embodiment, when the ebasis of the bend elastic constant before aging measured in accordance with ISO-178 in an atmospheric air is taken as 100%, the time required for obtaining bend elastic constant of 115% or more through aging in which the polyphenylene ether resin composition is left at rest at 150°C is preferably 2,000 hours or more, more preferably 2,200 hours or more, and even more preferably 2,500 hours or more. Being able to inhibit or delay an increase in the bend elastic constant indicates that the resin toughness is kept for a long time, and that a decrease in impact resistance during high temperature heat aging can also be inhibited.

Change in bend elastic constant through high-temperature aging can be measured by the subsequently described method in Examples.

(Rate of change in chloroform-insoluble content through aging for 1,000 hours at 150°C)

In the PPE resin composition according to the present embodiment, a rate of change in chloroform-insoluble content before and after aging in which a shaped article of 12,6 cm in length, 1.3 cm in width, and 1.6 mm in thickness is left at rest for 1,000 hours at 150°C is preferably 15 mass% or less, more preferably 14 mass% or less and even more preferably 12 mass% or less, and preferably 1 mass% or more, and more preferably 5 mass% or more.

The "rate of change in chloroform-insoluble content" is a value calculated by the following method.

A shaped article of 12.6 cm in length, 1.3 cm in width, and 1.6 mm in thickness is produced. Thereafter, 1) a sample of 1 cm × 1 cm × 1.6 mm is cut from a bottom edge of the shaped article before aging, is frozen and pulverized, and is subsequently sieved in order to collect particles that pass through 500 μm openings but not through 355 μm openings. Next, 200 mg of the collected particles are weighed out and are ultrasonicated for 6 hours in 40 mL of

chloroform. Soluble content and insoluble content are then separated by suction filtration. The resultant residue (insoluble content) is vacuum dried for 2 hours at 100°C and the mass of the dried residue is measured. The measured value is taken to be the "initial amount of residue". Additionally, 2) a shaped article that has been subjected to aging in which the shaped article is left at rest for 1,000 hours at 150°C is processed by the same method as in 1) from cutting until drying, and then the mass of the resultant residue is measured. The measured value is taken to be the "amount of residue after aging." The rate of change (mass%) in chloroform-insoluble content is calculated from the values obtained in 1) and 2) using equation (II) shown below.

$$\text{A rate of change in chloroform-insoluble content (mass\%)} = \{[\text{Amount of residue after aging (mg)} - \text{Initial amount of residue (mg)}]/[200 - \text{Initial amount of residue (mg)}]\} \times 100 \cdots \text{(II)}$$

(Morphology)

From a viewpoint of obtaining a more excellent long-term heat aging properties, as a morphology of the PPE resin composition according to the present embodiment, preferably, a phase containing (A) polyphenylene ether forms a continuous phase. The phase containing (A) polyphenylene ether may be a single phase of the (A) polyphenylene ether. This morphology can be determined by staining with a known stain such as ruthenium tetroxide, phosphotungstic acid, and the like, depending on the type of thermoplastic resin, and by observing an image (10,000× magnification) using a transmission electron microscope.

Formation of a continuous phase by a phase containing (A) polyphenylene ether tends to exhibit an effect of inhibiting a change in mechanical properties due to high temperature aging while maintaining heat resistance and mechanical and electrical properties obtained through inclusion of (B) condensed metal phosphate.

From a viewpoint of heat resistance, the deflection temperature under load of the PPE resin composition according to the present embodiment is preferably 90°C to 160°C, and more preferably 100°C to 150°C.

The deflection temperature under load can be measured by the method described in the Examples.

From a viewpoint of mechanical strength, the Charpy notched impact strength of the PPE resin composition according to the present embodiment measured in accordance with ISO 179 is preferably 2.0 $kJ/cm^2$ to 25.0 $kJ/cm^2$, and more preferably 5.0 $kJ/cm^2$ to 20.0 $kJ/cm^2$.

Further, from a viewpoint of heat aging resistance, the half-life of the Charpy impact strength after aging at 145°C is preferably 500 hours to 3,000 hours, and more preferably 500 hours to 2,000 hours.

The Charpy notched impact strength and the half-life of the Charpy impact strength after aging at 145°C can be measured by the method described in Examples below.

[Production method of PPE resin composition]

The PPE resin composition according to the present embodiment can be produced by melt-kneading the above described component (A), component (B), and further optionally the components (C), (D), (E) and other components by appropriately adjusting the melt-kneading conditions.

Various melt kneaders and kneading extruder and the like can be used for the production method of the PPE resin composition according to the present embodiment. A known kneader can be used as a melt kneader and a kneading extruder, and examples thereof include extruders such as a single screw extruder and a multi screw extruder such as a twin screw extruder, a heating and melting kneader such as a roll, a kneader, a Brabender plastograph and a Banbury mixer and the like. Among them, a twin screw extruder is preferable.

With respect to the conditions of melt-kneading (A), (B) and optional components for producing the above described resin composition, a twin screw extruder having a screw diameter of 25 mm to 90 mm is preferable in terms of stably obtaining a large amount of resin composition capable of exhibiting a desired effect of the present embodiment.

The extrusion resin temperature is preferably 280°C to 360°C, more preferably 300°C to 350°C, and even more preferably 320°C to 345°C. From a viewpoint of sufficient reactivity and extrudability, the extrusion resin temperature is preferably 300°C or higher, and from a viewpoint of keeping sufficient mechanical properties and extrudability, it is preferably 360°C or lower.

Further, dimensionless extrusion amount defined by the following chemical formula (III) is preferably within a range of 0.0004 to 0.003, more preferably within a range of 0.0008 to 0.0025, and even more preferably within a range of 0.001 to 0.002. Within these ranges, a reaction rate sufficient to obtain a heat aging resistance with less impact on mechanical properties can be obtained. As a result thereof, amount of compound added at terminal and/or side chain can be increased.

The dimensionless extrusion amount can be calculated by the subsequently described equation, where DLQ indicates dimensionless extrusion amount, Q indicates extrusion amount (kg/s), D indicates screw diameter (m), n indicates screw revolutions per second (rps), and ρ indicates density $kg/m^3$ at 23°C. DLQ is an abbreviation for Dimensionless Throughput rate and Q indicates throughput rate.

$$DLQ = (Q/\rho)/D^3/(2 \times 3.14 \times n) \ldots (III)$$

Further, the screw has at least three kneading zones, and total L/D of the kneading zones is preferably 10 to 20. Within this range, a reaction rate sufficient to obtain a heat aging resistance without progress of resin degradation can be obtained. Thus, an amount of compound added at terminal and/or side chain can be increased.

Moreover, in order to achieve enhanced reactivity between reactive compound and polyphenylene ether, preferably, these materials are previously blended and fed from the same feeder.

Note that, when the resin composition used in the present embodiment is produced by using a twin screw extruder (in particular, a large twin screw extruder (screw diameter: 40 mm to 90 mm)), gel and carbide that may arise from (A) polyphenylene ether during extrusion may mix into an extrusion resin pellet and cause deterioration of surface appearance and luminance of a shaped article. Thus, (A) polyphenylene ether is fed from the raw material feed port located uppermost stream (top feed) and the oxygen concentration inside the shooter located uppermost stream feed port is set preferably to 15 volume% or less, more preferably to 8 volume% or less, and even more preferably to 1 volume% or less.

The oxygen concentration can be adjusted by sufficiently replacing inside the raw material storage hopper with nitrogen, sealing the feed line extending from the raw material storage hopper to the raw material feed port to prevent the air from flowing into and out of the feed line, and then adjusting the nitrogen feeding amount and gas vent opening.

[Shaped article]

A shaped article formed by the PPE resin composition according to the present embodiment is obtained by molding the above described PPE resin composition.

Suitable methods of molding the above described PPE resin composition include, but are not limited to, injection molding, extrusion molding, vacuum forming, and pressure forming. In particular, injection molding is more suitable from a viewpoint of molding external appearance and luminance.

In terms of molding temperature of the PPE resin composition during molding, the barrel set maximum temperature is preferably within a range of 250°C to 350°C, more preferably within a range of 270°C to 340°C, and even more preferably within a range of 280°C to 330°C. From a viewpoint of sufficient molding workability, the molding temperature is preferably 250°C or more, and from a viewpoint of inhibiting the thermal deterioration of resin, it is preferably 350°C or less.

The mold temperature of the PPE resin composition during molding is preferably within a range of 40°C to 170°C, more preferably within a range of 80°C to 150°C, and even more preferably within a range of 80°C to 130°C. From a viewpoint of maintaining a sufficient external appearance of a shaped article, the mold temperature is preferably 40°C or more, and from a viewpoint of molding stability, it is preferably 170°C or less.

Due to its remarkable heat resistant aging property, a shaped article of the present embodiment may preferably be used for various applications such as automobiles, consumer electronics, office equipment, industrial products and the like, and more preferably, for automobile components that require a high heat aging resistance.

EXAMPLES

The following provides a more specific description of the present embodiment through examples and comparative examples. However, the present embodiment is not limited to only the following examples. Measuring methods of physical properties and raw materials used for the examples and comparative examples are described below.

[Measuring method of physical properties]

(1) Deflection temperature under load (DTUL)

Pellets of obtained resin composition were dried for 3 hours at 90°C in a hot-air dryer. An injection molding machine (IS-80EPN from Toshiba Machine Co., Ltd.) equipped with an ISO physical property specimen mold was used to mold the dried resin composition with settings of a cylinder temperature of 330°C, a mold temperature of 120°C, an injection pressure of 50 MPa (gauge pressure), an injection speed of 200 mm/s, and an injection time/cooling time of

20 s/20 s in order to form a dumbbell molded piece as an ISO 3167, type A multipurpose specimen. An 80 mm × 10 mm × 4 mm specimen prepared by cutting the obtained molded piece was used in measurement of deflection temperature under load (DTUL) (°C) at 1.82 MPa by the flatwise method in accordance with ISO 75.

In terms of evaluation criteria, when DTUL is 120°C or more, it was judged to have a high heat resistance.

(2) Shaped article external appearance (visual evaluation of molded piece)

In the molding described in (1) above, a dumbbell molded piece was molded by performing a short shot without complete filling (a state in which molding is performed with injection into an ISO dumbbell mold such that a gap of 5 mm or less is formed at the dead end). A grip section at the dead end where filling was not complete was visually observed and the state of the molded piece surface was evaluated.

A judgment of "poor" was made in a case in which there was a defect such as silvering, surface roughness due to fine gas escape marks, or cloudiness, and a judgment of "good" was made in a case in which such defects were not observed.

(3) Charpy notched impact strength

Pellets of obtained resin composition were fed to a screw inline type injection molding machine (EC75SXII injection molding machine from Toshiba Machine Co., Ltd.) set at 240°C to 320°C to mold an ISO 3167, type A multipurpose specimen under the condition of cylinder temperature of 280°C to 320°C and mold temperature of 40°C to 120°C. A specimen was cut out from the multipurpose specimen to evaluate Charpy notched impact strength (kJ/$m^2$) in accordance with ISO 179 under the condition of a temperature of 23 °C. When the measured value is higher, it was judged that the testpiece had a higher impact resistance.

(4) Heat aging resistance

(4-1) Half-life of Charpy notched impact strength through aging at 145°C

The Charpy notched specimens obtained from the above described (3) were left in a hot-air oven with a temperature setting of 145°C, 5 specimens were taken out every 50 hours after 200 hours, and the Charpy impact strength (impact strength after aging) was measured at 23°C in accordance with ISO 179.

A physical property retention rate on the basis of the initial impact strength measured by the aforementioned (3) was calculated by the following equation (IV), and the time at which the physical property retention rate becomes 50% is taken as half-life.

$$\text{Physical property retention rate (\%)} = \{\text{Impact strength after aging (kJ/cm}^2) \div \text{initial impact strength (kJ/cm}^2)\} \times 100 \cdots \text{(IV)}$$

In terms of evaluation criteria, when the half-life is 500 hours or more, it was judged that the testpiece had a high heat aging resistance.

(4-2) Time required for bend elastic constant to be 115% or more through aging at 150°C

Specimens were produced from pellets of obtained resin composition in accordance with ISO-15103 using IS-100GN injection molding machine (cylinder temperature is set at 300°C and mold temperature is set at 80°C) from Toshiba Machine Co., Ltd. Using the resultant specimens, the bend elastic constant (the bend elastic constant before aging) was measured in accordance with ISO-178 under conditions of test speed of 2mm/min, at 23°C, within 72 hours and in an atmospheric air.

After that, the specimens were left in a hot-air oven with a temperature setting of 150°C, and specimens were taken out every 500 hours, and the bend elastic constant (the bend elastic constant after aging) was measured in accordance with ISO-178 with settings of test speed of 2mm/min.

On the basis of the bend elastic constant before aging taken as 100%, a rate of change (%) in the bend elastic constant after aging was calculated using the following equation (V).

$$\text{Rate of change (\%) in bend elastic constant after aging} = \{\text{bend elastic constant (GPa) after aging} \div \text{bend elastic constant before aging (GPa)}\} \times 100 \cdots \text{(V)}$$

Then, the time required for the rate of change in the bend elastic constant after aging to be 115% or more was measured.

In terms of evaluation criteria, when the time required for the rate of change in the bend elastic constant after aging to be 115% or more was 2,000 hours or more, it was judged as a good heat aging resistance.

(4-3) Surface smoothness after aging

A flat shaped article of 10 cm in length, 4.8 cm in width and thickness in 4.0 mm was produced from pellets of obtained resin composition, and the average surface roughness Ra of five viewing fields (each having a size of 0.15 mm × 0.15 mm) in 1 cm × 1 cm square in the center of the length and width of the flat shaped article was measured for each of before aging and after aging in which the shaped article was left at rest for 500 hours at 150°C. Then each average value was taken as an "average value of Ra before aging" and an "average value of Ra after aging."

Further, when the proportion of the Ra average value after aging relative to the Ra average value before aging (Ra average value after aging/Ra average value before aging) was in the range of 0.9 to 1.1, it was judged as "good", and if it is out of the range, it was judged as "poor."

(4-4) Electrical properties after aging

A flat shaped article of 10 cm in length, 4.8 cm in width and thickness in 4.0 mm was produced from pellets of obtained resin composition, and the comparative tracking index (CTI) at 500V after aging in which the shaped article was left at rest for 500 hours at 150°C was measured in accordance with JIS C2134. It was judged as good if passed and judged as poor if failed.

(5) Rate of change in chloroform-insoluble content

A shaped article of 12.6 cm in length, 1.3 cm in width, and 1.6 mm in thickness was produced from obtained resin composition. Thereafter, 1) a sample of 1 cm × 1 cm × 1.6 mm was cut from a bottom edge of the shaped article before aging, was frozen and pulverized, and was subsequently sieved in order to collect particles that pass through 500 μm openings but not through 355 μm openings. Next, 200 mg of the collected particles were weighed out and were ultrasonicated for 6 hours in 40 mL of chloroform. Soluble content and insoluble content were then separated by suction filtration. The resultant residue (insoluble content) was vacuum dried for 2 hours at 100°C and the mass of the dried residue was measured. The measured value was taken to be the "initial amount of residue". Additionally, 2) a shaped article that was subjected to aging in which the shaped article was left at rest for 1,000 hours at 150°C was processed by the same method as in 1) from cutting until drying, and then the mass of the resultant residue was measured. The measured value was taken to be the "after aging amount of residue." The rate of change (mass %) in chloroform-insoluble content was calculated from the values obtained in 1) and 2) using the following equation (II).

$$\text{A rate of change in chloroform-insoluble content (mass\%)} = \{[\text{After aging amount of residue (mg)} - \text{Initial amount of residue (mg)}]/[200 - \text{Initial amount of residue (mg)}]\} \times 100 \cdots \text{(II)}$$

(6) Amount of reactive compound added at polyphenylene ether (6-1)Amount added at methyl group

A total amount of reactive compound added at a terminal methyl group and a side chain methyl group is obtained by dividing an integrated value of a peak of methylene obtained by adding a reactive compound, the peak appearing at 2.8 to 3.6 ppm in $^{1}$H-NMR, by an integrated value of a peak of 6.0 to 7.0 ppm derived from an aromatic ring of polyphenylene ether, and amount (pieces) added at a terminal methyl group and a side chain methyl group per 100 monomer units forming a polyphenylene ether is determined.

Further, the ratio of the amount added at a side chain methyl group relative to the amount added at a terminal methyl group is determined by calculating an integrated value for the peak at 30 to 36 in $^{31}$P-NMR derived from a side

chain methyl group relative to an integrated value for the peak at 36 to 45 ppm in $^{31}$P-NMR derived from a main chain methyl group.

Measurement conditions of $^{1}$H-NMR and $^{31}$P-NMR are described below.

$^{1}$H-NMR measurement conditions

Device: JEOL-ECA500
Observed nucleus: $^{1}$H
Observation frequency: 500.16 MHz
Measurement method: Single-plus
Pulse width: 7 μs
Wait time: 5 s
Cumulative number: 512
Solvent: $CDCl_3$
Sample concentration: 5 w%
Chemical shift standard: TMS 0.00 ppm

$^{31}$P-NMR measurement conditions

Device: JEOL RESONANCE ECS400
Observed nucleus: $^{31}$P
Observation frequency: 161.8 MHz
Pulse width: 45°
Wait time: 5 s
Cumulative number: 10,000
Solvent: $CDCl_3$
Sample concentration: 20 w/v%
Chemical shift standard: 85% phosphoric acid aqueous solution (external standard) 0 ppm

(6-2) Amount added at terminal OH group

The amount added can be determined by the following equation (VI) using an integrated value [A] for the peak at 146.4 ppm in $^{13}$C-NMR (carbon adjacent to oxygen atom of ether bond formed through addition of reactive compound at OH group) and an integrated value [B] for 145.4 ppm in $^{13}$C-NMR (carbon adjacent to OH group).

The amount (pcs.) added at terminal OH group of reactive compound per 100 monomer units forming the polyphenylene ether = (The amount of terminal OH per 100 monomer units forming the precursor polyphenylene ether) × {[A]/([A] + [B])} ··· (VI)

$^{13}$C-NMR measurement conditions are described below.

$^{13}$C-NMR measurement conditions

Device: Bruker Biospin Avance 600
Observed nucleus: $^{13}$C
Observation frequency: 150.9 MHz
Measurement method: Inverse gated decoupling
Pulse width: 30°
Wait time: 10 s
Cumulative number: 2,000
Solvent: $CDCl_3$
Sample concentration: 20 w/v%
Chemical shift standard: TMS 0 ppm

(7) Morphology

An ultrathin section having a thickness of several tens to several hundreds nm was produced from a shaped article produced in the same manner as the above described (5) by using an ultra microtome. Thereafter, the ultrathin section was stained by using known stains such as ruthenium tetroxide, phosphotungstic acid and the like depending on the thermoplastic resin or the compatibilizer to be used, for example. Thereafter, the ultra thin section after stain was observed by using TEM (product name: "HT7700" from Hitachi High-Technologies Corporation) to obtain a 10,000× image. The obtained image was observed to determine if the phaset containing the component of (A) forms a continuous phase.

[Raw material]

<Polyphenylene ether>

(PPE-1)

The precursor polyphenylene ether, PPE-1, was produced by the following production method.

A 40 L jacketed polymerization tank equipped with a sparger for introduction of an oxygen-containing gas at the bottom of the polymerization tank, a stirring turbine impeller, and a baffle, and having a reflux condenser on a vent gas line at the top of the polymerization tank was charged with 4.57 g of cupric oxide, 24.18 g of 47 mass% hydrogen bromide aqueous solution, 11.00 g of di-t-butylethylenediamine, 62.72 g of di-n-butylamine, 149.92 g of butyldimethylamine, 20.65 kg of toluene, and 3.12 kg of 2,6-dimethylphenol while blowing nitrogen gas into the polymerization tank at a flow rate of 0.5 L/min. The contents of the polymerization tank were stirred until a homogeneous solution was obtained and the internal temperature of the polymerization tank was 25°C. Next, dry air was started to be introduced into the polymerization tank by using the sparger at a rate of 32.8 NL/min and polymerization was initiated. Passing of dry air was continued for 140 minutes and a polymerization mixture was obtained. The internal temperature during polymerization was controlled to 40°C. Passing of dry air was stopped and 10 kg of a 2.5 mass% aqueous solution of a tetrasodium salt of ethylenediaminetetraacetic acid (reagent produced by Dojindo Laboratories) was added to the polymerization mixture. The polymerization mixture was stirred for 150 minutes at 70°C and was then left at rest for 20 minutes. Thereafter, the organic phase and the aqueous phase were separated by liquid-liquid separation.

The obtained organic phase was continuously brought into contact with methanol under stirring while performing solidification to obtain a polyphenylene ether slurry solution. Wet pulverization of the slurry was carried out using a 1 mm lattice slit in a Disintegrator (product name) from Komatsu Zenoah Co. and solid-liquid separation of the pulverized slurry was carried out while continuously supplying the pulverized slurry into a Young filter-type vacuum filter. Rinse washing was performed with methanol in an amount equivalent to three times the weight of polyphenylene ether after drying on the Young filter-type vacuum filter. After this washing, the resultant polyphenylene ether particles were dried. The polyphenylene ether particles in the slurry after wet pulverization had a content of particles larger than 1,700 μm of 0 weight% and a weight average particle diameter of 220 μm.

Poly(2,6-dimethyl-1,4-phenylene ether) (PPE-1) obtained by the production method described above had a reduced viscosity of 0.38 dL/g, the number average molecular weight of 15,300, the number of terminal OH groups per 100 monomer units forming the polyphenylene ether of 0.72, and the number of N,N-dibutylaminomethyl groups per 100 monomer units forming the polyphenylene ether of 0.43.

The reduced viscosity was measured by an Ubbelohde-type viscometer at 30°C using a 0.5 g/dL chloroform solution.

<Reactive compound>

9,10-dihydro-9-oxa-10-phosphaphenanthrene-10-oxid (HCA) (from SANKO CO., LTD.)

<Structural unit in modified PPE>

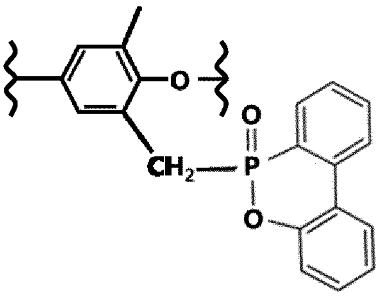

··· (9)

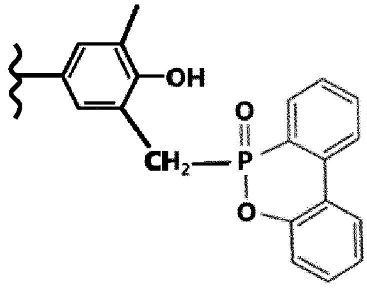

··· (10)

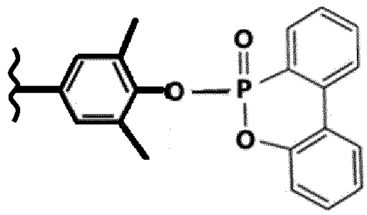

··· (11)

<(B) Condensed metal phosphate>

(B-1) Sodium hexametaphosphate (from Uunion Co., Ltd.)
(B-2) Magnesium metaphosphate (from Taihei Chemical Industrical Co., Ltd.)
(B-3) Potassium metaphosphate (from Taihei Chemical Industrical Co., Ltd.)
(B-4) Sodium Tripolyphosphate (from TAIYO CHEMICAL INDUSTRY CO., LTD.)
(B-5) Ammonium polyphosphate (product name: TERRAJU from Chisso Corporation)

<(C) Antioxidant>

(C-1)

Phosphorus antioxidant (Chemical name: 3,9-bis(2,6-di-tert-butyl-4-methylphenoxy)-2,4,8,10-tetraoxa-3,9-diphosphas-piro[5.5] undecane, from ADEKA CORPORATION, Product name: ADK Stab PEP-36® (PEP-36 is a registered trademark in Japan, other countries, or both)

<(D) Styrene resin>

(D-1)

General purpose polystyrene (from Asahi Kasei Chemicals Corporation; Product name: Polystyrene 680® (Polystyrene 680 is a registered trademark in Japan, other countries, or both))

<(E) Elastomer>

(E-1)

Three-block type hydrogenated block copolymer having a weight average molecular weight of 71,200 and including a polystyrene block with a bound styrene content of 32 mass% and a hydrogenated butadiene block with a percentage hydrogenation of 98% was used

[Examples 1 to 11, Comparative Examples 1 to 6]

In examples and comparative examples, pellets of resin composition were obtained by feeding each component from a first raw material inlet port of a twin screw extruder (ZSK-40MC from Coperion GmbG) in accordance with the composition shown in Table 1, with a screw rotation speed of 250 rpm and under other extruding conditions illustrated in Table 1. When observing the morphology of each shaped article produced from the resin composition of Examples 1 to 11 and Comparative Examples 1 to 6 by the following method, it was observed that the component containing (A) formed a continuous phase. The evaluation results of the resin composition are shown in Table 1. Examples 5 to 11 are reference examples.

Table 1

| | | | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|---|
| Polyphenylene ether resin composition | (A) Polyphenylene ether | Raw material: Precursor PPE | PPE-1 | mass% | 65 | 65 | 65 | 65 | 65 | 65 | 65 | 65 | 65 | 65 | 65 | 65 | 65 | 65 | 65 | 65 | 65 |
| | | Raw material: Reactive compound | HCA | mass% | 1 | 1 | 1 | 1 | – | – | – | – | – | – | – | – | – | – | 1 | 1 | 1 |
| | | Type of structural unit in modified PPE | | – | Eq(9) to (11) | Eq(9) to (11) | Eq(9) to (11) | Eq(9) to (11) | – | – | – | – | – | – | – | – | – | – | Eq (9),(10) | Eq (9),(10) | Eq (9),(10) |
| | | Amount added at terminal methyl group and side chain methyl group | | pcs | 0.25 | 0.25 | 0.25 | 0.25 | – | – | – | – | – | – | – | – | – | – | 0.08 | 0.05 | 0.05 |
| | | Amount added at terminal methyl group/ amount added at side chain methyl group | | mol% | 25 | 25 | 25 | 25 | – | – | – | – | – | – | – | – | – | – | 8 | 5 | 8 |
| | | Amount added at terminal OH group | | pcs | 0.03 | 0.03 | 0.03 | 0.03 | – | – | – | – | – | – | – | – | – | – | 0 | 0 | 0 |
| | (B) Condensed metal phosphate | | (B-1) | mass% | 0.5 | – | – | – | 3 | 2 | – | – | – | 2 | 2 | – | – | – | – | – | – |
| | | | (B-2) | mass% | – | 0.5 | – | – | – | – | 2 | – | – | – | – | – | – | – | – | – | – |
| | | | (B-3) | mass% | – | – | 0.5 | – | – | – | – | 2 | – | – | – | – | – | – | – | – | – |
| | | | (B-4) | mass% | – | – | – | 0.5 | – | – | – | – | 2 | – | – | – | – | – | – | – | – |
| | | | (B-5) | mass% | – | – | – | – | – | – | – | – | – | – | – | – | – | 2 | – | – | – |
| | (C) Antioxidant | | (C-1) | mass% | – | – | – | – | – | 0.6 | 0.6 | 0.6 | 0.6 | 2.5 | 0.6 | – | 0.6 | 0.6 | – | – | – |
| | (D) Styrene resin | | (D-1) | mass% | 30 | 30 | 30 | 30 | 27 | 27.4 | 27.4 | 27.4 | 27.4 | 25.5 | 27.4 | 30 | 29.4 | 27.4 | 30 | 30 | 30 |
| | (E) Elastomer | | (E-1) | mass% | 5 | 5 | 5 | 5 | 5 | 5 | 5 | 5 | 5 | 5 | 5 | 5 | 5 | 5 | 5 | 5 | 5 |
| | | | Total | mass% | 101.5 | 101.5 | 101.5 | 101.5 | 100 | 100 | 100 | 100 | 100 | 100 | 100 | 100 | 100 | 100 | 101 | 101 | 101 |
| | Extrusion conditions | | Barrel temperature | ℃ | 320 | 320 | 320 | 320 | 320 | 320 | 320 | 320 | 320 | 320 | 320 | 320 | 320 | 320 | 320 | 320 | 250 |
| | | | Dimensionless extrusion amount (DLQ) | – | 0.001 | 0.001 | 0.001 | 0.001 | 0.001 | 0.001 | 0.001 | 0.001 | 0.001 | 0.001 | 0.0025 | 0.001 | 0.001 | 0.001 | 0.001 | 0.0001 | 0.001 |
| | | | Total of screw kneading zones L/D | – | 15 | 15 | 15 | 15 | 15 | 15 | 15 | 15 | 15 | 15 | 15 | 15 | 15 | 15 | 5 | 15 | 15 |
| Evaluation | (1) Deflection temperature under load (1.82MPa) | | | ℃ | 132 | 132 | 132 | 132 | 135 | 135 | 136 | 135 | 134 | 132 | 134 | 135 | 133 | 130 | 135 | 133 | 134 |
| | (2) Shaped article external appearance | | | – | Good | Good | Good | Good | Good | Good | Good | Good | Good | Good | Good | Poor | Poor | Good | Good | Good | Good |
| | (3) Charpy notched impact strength (23°C) | | | $kJ/cm^2$ | 13.0 | 12.5 | 12.5 | 12.0 | 10.2 | 10.2 | 10.5 | 10 | 10 | 9.5 | 10 | 11 | 10.1 | 9.8 | 9.9 | 9.5 | 9.7 |
| | (4) Heat aging resiscance | | Half life of Charpy notched impact strength (aging at 145°C) | hr | 800 | 750 | 750 | 750 | 600 | 600 | 600 | 600 | 600 | 650 | 650 | <200 | 200 | 300 | 350 | 300 | 300 |
| | | | Time required for bend elastic constant to be 115% or more (aging at 150°C) | hr | 4000 | 3500 | 3500 | 3500 | 2500 | 2500 | 2500 | 2500 | 2500 | 3000 | 3500 | 500 | 1000 | 500 | 1500 | 1500 | 1500 |
| | | | Surface smoothness after aging (150°C × 500 hr aging) | – | Good | Good | Good | Good | Good | Good | Good | Good | Good | Good | Good | Poor | Poor | Poor | Poor | Poor | Poor |
| | | | Electrical properties after aging (CTI) (150 °C × 500 hr aging) | – | Good | Good | Good | Good | Good | Good | Good | Good | Good | Good | Good | Poor | Poor | Poor | Poor | Poor | Poor |
| | (5) Rate of change in chloroform-insoluble content (150°C × 1000 hr) | | | mass% | 2 | 5 | 5 | 5 | 14 | 13 | 14 | 14 | 14 | 10 | 9 | 35 | 32 | 27 | 22 | 22 | 22 |

Table 1 shows that polyphenylene ether resin composition having an excellent heat aging resistance can be obtained from Examples 1 to 11.

INDUSTRIAL APPLICABILITY

According to the present disclosure, a resin composition that contains polyphenylene ether and has a remarkable heat aging resistance can be obtained. The resin composition can be used in various applications such as automobiles, consumer electronics, office equipment, industrial products and the like. In particular, a shaped article formed from the resin composition can be effectively used for automobile components such as light reflection components requiring fluidity and high heat aging resistance.

## Claims

**1.** A polyphenylene ether resin composition comprising:

(A) a polyphenylene ether; and
(B) a condensed metal phosphate, wherein

when a bend elastic constant of the polyphenylene ether resin composition before aging measured in accordance with ISO-178 in an atmospheric air is taken as 100%, time required for obtaining a bend elastic constant of 115% or more through aging in which the polyphenylene ether resin composition is left at rest

at 150°C is 2,000 hours or more;

a shaped article of 12.6 cm in length, 1.3 cm in width, and 1.6 mm in thickness formed from the polyphenylene ether resin composition exhibits a rate of change in chloroform-insoluble content of 15 mass% or less before and after aging in which the shaped article is left at rest for 1,000 hours at 150°C; and

the (A) polyphenylene ether includes at least one structural unit selected from a group consisting of chemical formulate (1), (2) and (3) illustrated below;

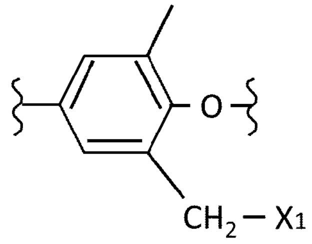

··· (1)

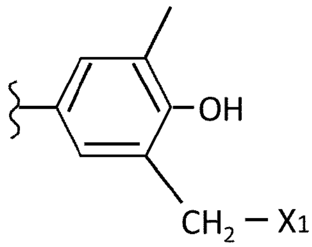

··· (2)

wherein $X_1$ in the chemical formulae (1) and (2) is a group selected from chemical formulae illustrated below,

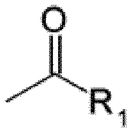 , 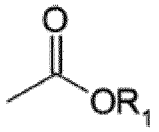 , 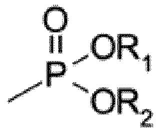 , 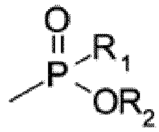 , 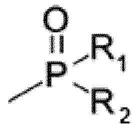

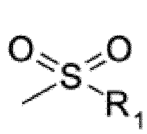 , 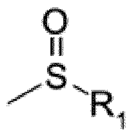

where $R_1$ and $R_2$ in $X_1$ are each, independently of one another, a substituent having a carbon number of 1 or more,

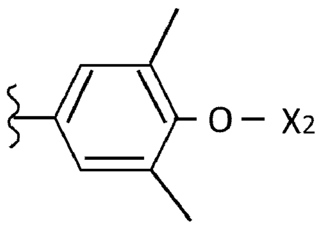

··· (3)

wherein $X_2$ in chemical formula (3) is a group selected from chemical formulae illustrated below,

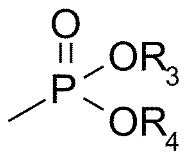 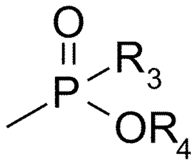 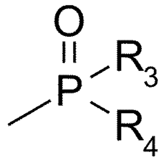

where $R_3$ and $R_4$ in $X_2$ are each, independently of one another, a group selected from a group consisting of a hydrogen atom, an alkyl group, an aryl group, an aminoalkyl group, and an arylamino group, and $R_3$ and $R_4$ may form a cyclic structure through bonding of carbon atoms included therein, with the proviso that chemical formula (3) does not substantially include a carbon-carbon double bond other than an aromatic ring double bond.

**2.** The polyphenylene ether resin composition according to claim 1, wherein, the $X_1$ in the chemical formulae (1) and (2) is a group selected from chemical formulae illustrated below,

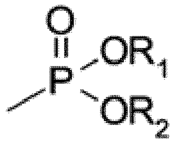 , 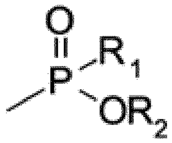 , 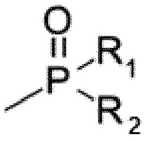

where $R_1$ and $R_2$ in $X_1$ are each, independently of one another, a substituent having a carbon number of 1 or more.

**3.** The polyphenylene ether resin composition according to claim 1 or 2, wherein the (A) polyphenylene ether has 0.01 to 10.0 pieces of any structural units selected from a group consisting of the chemical formulae (1), (2) and (3) per 100 monomer units for forming the (A) polyphenylene ether.

**4.** The polyphenylene ether resin composition according to any one of claims 1 to 3, wherein mol% of a structural unit represented by the chemical formula (1) relative to a structural unit represented by the chemical formula (2) is 0 mol% to 30 mol%.

**5.** The polyphenylene ether resin composition according to any one of claims 1 to 4, wherein the (A) polyphenylene ether includes a structural unit represented by the chemical formula(e) (1) and/or (2) and a structural unit represented by the chemical formula (3).

**6.** The polyphenylene ether resin composition according to any one of claims 1 to 5, further comprising (C) an antioxidant, wherein content of the (C) relative to 100 parts by mass of the (A) polyphenylene ether is 0.1 to 4.0 parts by mass.

**7.** The polyphenylene ether resin composition according to any one of claims 1 to 6, wherein a phase containing the (A) polyphenylene ether forms a continuous phase.

**8.** The polyphenylene ether resin composition according to any one of claims 1 to 7, wherein a content of the component (B) relative to 100 parts by mass of the polyphenylene ether (A) is 0.3 to 5 parts by mass.

**Patentansprüche**

**1.** Polyphenylenetherharz-Zusammensetzung, umfassend:

(A) einen Polyphenylenether; und
(B) ein kondensiertes Metallphosphat, wobei

wenn eine Biegeelastizitätskonstante der Polyphenylenetherharz-Zusammensetzung vor Alterung, gemessen gemäß ISO-178 in atmosphärischer Luft, als 100 % angenommen wird, die Zeit, die erforderlich ist, um durch Alterung, wobei die Polyphenylenetherharz-Zusammensetzung bei 150 C° stehengelassen gelassen wird, eine Biegeelastizitätskonstante von 115 % oder mehr zu erhalten, 2000 Stunden oder mehr beträgt;

ein geformter Gegenstand mit einer Länge von 12,6 cm, einer Breite von 1,3 cm und einer Dicke von 1,6 mm, der aus der Polyphenylenether-Harzzusammensetzung gebildet ist, einen Änderungsgrad des in Chloroform unlöslichen Gehalts von 15 Massen-% oder weniger vor und nach der Alterung , wobei der geformte Gegenstand für 1000 Stunden bei 150°C° stehengelassen gelassen wird, aufweist; und

der (A)-Polyphenylenether mindestens eine Struktureinheit enthält, die aus einer Gruppe ausgewählt ist, die aus den unten dargestellten chemischen Formeln (1), (2) und (3) besteht;

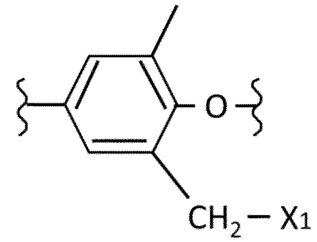

··· (1)

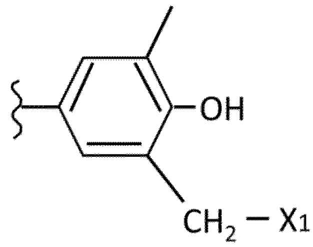

··· (2)

wobei $X_1$ in den chemischen Formeln (1) und (2) eine Gruppe ist, die aus den unten dargestellten chemischen Formeln ausgewählt ist,

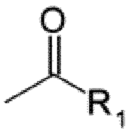 , 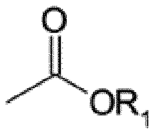 , 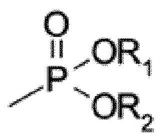 , 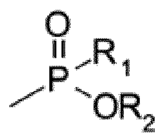 , 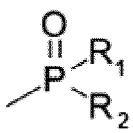

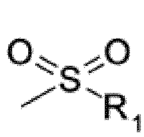 , 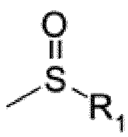

wobei $R_1$ und $R_2$ in $X_1$ jeweils unabhängig voneinander ein Substituent mit einer Kohlenstoffzahl von 1 oder mehr sind,

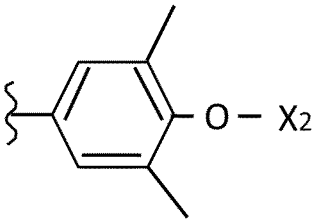

··· (3)

wobei $X_2$ in der chemischen Formel (3) eine Gruppe ist, die aus den unten dargestellten chemischen Formeln ausgewählt ist,

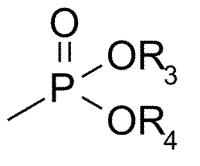 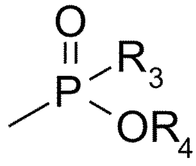 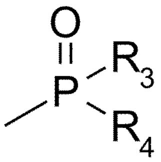

wobei $R_3$ und $R_4$ in $X_2$ jeweils unabhängig voneinander eine Gruppe sind, ausgewählt aus der Gruppe bestehend aus einem Wasserstoffatom, einer Alkylgruppe, einer Arylgruppe, einer Aminoalkylgruppe und einer Arylaminogruppe, und $R_3$ und $R_4$ durch Bindung von darin enthaltenen Kohlenstoffatomen eine cyclische Struktur bilden können, mit der Maßgabe, dass die chemische Formel (3) eine andere Kohlenstoff-Kohlenstoff-Doppelbindung als eine aromatische Ringdoppelbindung im Wesentlichen nicht enthält.

**2.** Polyphenylenetherharz-Zusammensetzung nach Anspruch 1, wobei $X_1$ in den chemischen Formeln (1) und (2) eine Gruppe ist, die aus den unten dargestellten chemischen Formeln ausgewählt ist,

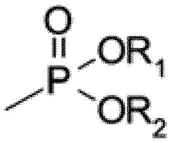 , 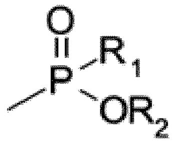 , 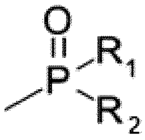

wobei $R_1$ und $R_2$ in $X_1$ jeweils unabhängig voneinander ein Substituent mit einer Kohlenstoffzahl von 1 oder mehr sind.

**3.** Polyphenylenetherharz-Zusammensetzung nach Anspruch oder1 2, wobei der (A) Polyphenylenether 0,01 bis 10,0 Stück Struktureinheiten aufweist, ausgewählt aus der Gruppe bestehend aus den chemischen Formeln (1), (2) und (3), pro 100 Monomereinheiten zur Bildung des (A) Polyphenylenethers.

**4.** Polyphenylenetherharz-Zusammensetzung nach einem der Ansprüche 1 bis 3, wobei die Mol-% einer durch die chemische Formel (1) dargestellten Struktureinheit im Verhältnis zu einer durch die chemische Formel (2) dargestellten Struktureinheit 0 Mol-% bis 30 Mol-% sind.

**5.** Polyphenylenetherharz-Zusammensetzung nach einem der Ansprüche 1 bis 4, wobei der (A) Polyphenylenether eine durch die chemische(n) Formel(n) (1) und/oder (2) dargestellte Struktureinheit und eine durch die chemische Formel (3) dargestellt Struktureinheit enthält.

**6.** Polyphenylenetherharz-Zusammensetzung nach einem der Ansprüche 1 bis 5, welche weiterhin (C) ein Antioxidationsmittel enthält, wobei der Gehalt an (C) in Bezug auf auf 100 Massenteile des Polyphenylenethers (A) 0,1 bis 4,0 Massenteile beträgt.

**7.** Polyphenylenetherharzzusammensetzung nach einem der Ansprüche 1 bis 6, wobei eine den Polyphenylenether (A) enthaltende Phase eine kontinuierliche Phase bildet.

**8.** Polyphenylenetherharzzusammensetzung nach einem der Ansprüche 1 bis 7, wobei der Gehalt der Komponente (B) in Bezug auf 100 Massenteile des Polyphenylenethers (A) 0,3 bis 5 Masseteile beträgt.

## Revendications

**1.** Composition de résine de poly(éther de phénylène) comprenant :

(A) un poly(éther de phénylène) ; et
(B) un phosphate de métal condensé, pour laquelle lorsqu'une constante élastique en flexion de la composition de résine de poly(éther de phénylène) avant vieillissement mesurée conformément à l'ISO-178 dans un air atmosphérique est définie comme étant de 100 %, le temps requis pour obtenir une constante élastique en flexion de 115 % ou plus par vieillissement dans lequel la composition de résine de poly(éther de phénylène) est laissée au repos à 150 °C est de 2 000 heures ou plus ; pour laquelle

un article façonné de 12,6 cm de longueur, 1,3 cm de largeur et 1,6 mm d'épaisseur formé à partir de la composition de résine de poly(éther de phénylène) présente une vitesse de changement de la teneur en matières insolubles dans le chloroforme de 15 % en masse ou moins avant et après vieillissement dans lequel l'article façonné est laissé au repos pendant 1 000 heures à 150 °C ; et dans laquelle
le poly(éther de phénylène) (A) inclut au moins un motif structural choisi dans un groupe constitué des formules chimiques (1), (2) et (3) illustrées ci-dessous ;

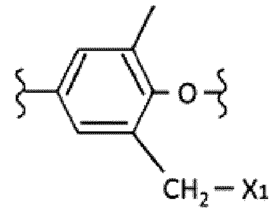

··· (1)

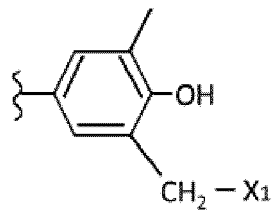

··· (2)

dans laquelle $X_1$ dans les formules chimiques (1) et (2) est un groupe choisi parmi les formules chimiques illustrées ci-dessous,

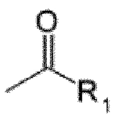 , 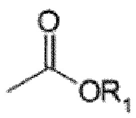 , 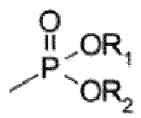 , 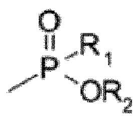 , 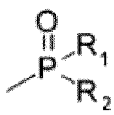

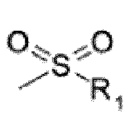 , 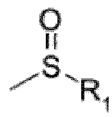

où $R_1$ et $R_2$ dans $X_1$ sont chacun, indépendamment l'un de l'autre, un substituant ayant un nombre d'atomes de carbone de 1 ou plus,

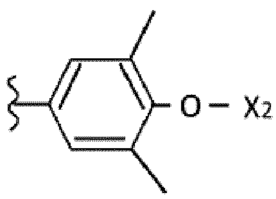

··· (3)

dans laquelle $X_2$ dans la formule chimique (3) est un groupe choisi parmi les formules chimiques illustrées ci-dessous,

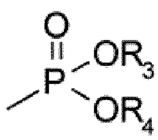 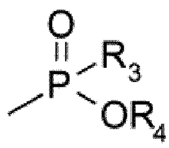 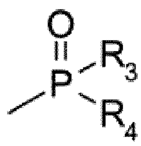

où $R_3$ et $R_4$ dans $X_2$ sont chacun, indépendamment l'un de l'autre, un groupe choisi dans un groupe constitué d'un atome d'hydrogène, d'un groupe alkyle, d'un groupe aryle, d'un groupe aminoalkyle et d'un groupe arylamino, et $R_3$ et $R_4$ peuvent former une structure cyclique par liaison d'atomes de carbone inclus dans ceux-ci, à condition que la formule chimique (3) n'inclue pas sensiblement de double liaison carbone-carbone autre qu'une double liaison de noyau aromatique.

2. Composition de résine de poly(éther de phénylène) selon la revendication 1, dans laquelle, le $X_1$ dans les formules chimiques (1) et (2) est un groupe choisi parmi les formules chimiques illustrées ci-dessous,

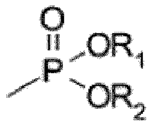 , 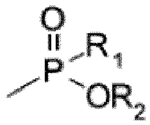 , 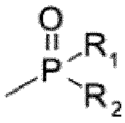

où $R_1$ et $R_2$ dans $X_1$ sont chacun, indépendamment l'un de l'autre, un substituant ayant un nombre d'atomes de carbone de 1 ou plus.

3. Composition de résine de poly(éther de phénylène) selon la revendication 1 ou 2, dans laquelle le poly(éther de phénylène) (A) a 0,01 à 10,0 éléments de tout motif structural choisi dans un groupe constitué des formules chimiques (1), (2) et (3) par 100 motifs monomères pour former le poly(éther de phénylène) (A).

4. Composition de résine de poly(éther de phénylène) selon l'une quelconque des revendications 1 à 3, dans laquelle le % en mol d'un motif structural représenté par la formule chimique (1) par rapport à un motif structural représenté par la formule chimique (2) est de 0 % en mol à 30 % en mol.

5. Composition de résine de poly(éther de phénylène) selon l'une quelconque des revendications 1 à 4, dans laquelle le poly(éther de phénylène) (A) inclut un motif structural représenté par la (les) formule(s) chimique(s) (1) et/ou (2) et un motif structural représenté par la formule chimique (3).

6. Composition de résine de poly(éther de phénylène) selon l'une quelconque des revendications 1 à 5, comprenant en outre un antioxydant (C), dans laquelle la teneur du (C) par rapport à 100 parties en masse du poly(éther de phénylène) (A) est de 0,1 à 4,0 parties en masse.

7. Composition de résine de poly(éther de phénylène) selon l'une quelconque des revendications 1 à 6, dans laquelle une phase contenant le poly(éther de phénylène) (A) forme une phase continue.

8. Composition de résine de poly(éther de phénylène) selon l'une quelconque des revendications 1 à 7, dans laquelle une teneur du component (B) par rapport à 100 parties en masse du poly(éther de phénylène) (A) est de 0,3 à 5 parties en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2925646 B
- JP 3052256 B
- JP H0812753 A
- JP H0873730 A